(19) Europäisches Patentamt / European Patent Office / Office européen des brevets

(11) **EP 1 758 095 A1**

(12) **EUROPEAN PATENT APPLICATION**
published in accordance with Art. 158(3) EPC

(43) Date of publication:
28.02.2007 Bulletin 2007/09

(51) Int Cl.:
*G10K 11/16* (2006.01)          *B60J 5/00* (2006.01)
*B62D 25/08* (2006.01)          *H04R 1/02* (2006.01)

(21) Application number: 05728570.2

(22) Date of filing: 11.04.2005

(86) International application number:
PCT/JP2005/007032

(87) International publication number:
WO 2005/111993 (24.11.2005 Gazette 2005/47)

(84) Designated Contracting States:
AT BE BG CH CY CZ DE DK EE ES FI FR GB GR
HU IE IS IT LI LT LU MC NL PL PT RO SE SI SK TR

(30) Priority: 14.05.2004   JP 2004144847
20.05.2004   JP 2004150847

(71) Applicant: Yanmar Co., Ltd.
Osaka-shi, Osaka 530-0013 (JP)

(72) Inventors:
• KANEKO, Mitsugu c/o Yanmar CO.,LTD 1-32
Chayamachi
Osaka 530-0013 (JP)
• SHIMIZU,Akihiko c/o Yanmar CO.,LTD 1-32
Chayamachi
Osaka 530-0013 (JP)

(74) Representative: Jostarndt, Hans-Dieter
Brüsseler Ring 51
52074 Aachen (DE)

(54) **NOISE SUPPRESSING STRUCTURE OF CABIN**

(57) The purpose of the present invention is to change hollow resonance frequency in a cabin without changing the dimensions of the cabin and not providing any partition in the cabin. The present invention provides noise proof structure of a cabin reducing furry noise so as to improve livability and comfortability for an operator.

A resonator resonating at frequency of hollow resonance is provided at a position at which sound pressure is high when the hollow resonance occurs. A rotary sensor 44 measuring rotary speed of an engine 50 of the working machine or the like having the cabin, an actuator 46 opening and closing a partition 41 at the opening, and a controller 45 controlling the partition 41 through the actuator 46 corresponding to the rotary speed measured by the rotary sensor 44 are provided.

Fig. 15

EP 1 758 095 A1

**Description**

Technical Field

The present invention relates to noise proof structure reducing noise in a cabin of a working machine caused by rotary vibration of an engine at the time of traveling, especially low frequency sound, that is, furry noise, so as to improve livability in the cabin.

Background Art

Conventionally, with regard to a cabin of an agricultural working machine such as a tractor or a combine or a construction machine such as a pickup truck or a dump truck, or to a room adj acent to a vibration source such as a trunk or a workroom to which an engine or another vibration source is provided, as a method reducing furry noise generated in the cabin, there is known vibration isolation by changing a spring constant at a support part of a cabin structure body and an engine support part, active noise control attenuating furry noise by generating sound having the same frequency and opposite phase against the furry noise by a loudspeaker, and the like.
There are also well known an art that a suction resonator is constructed by using a space between longitudinal reinforcing beads formed in a roof panel constituting a roof of the cabin and a suction resonator pipe extended from the suction resonator is opened in the vicinity of a back panel of the cabin structure body (for example, see the Patent Literature 1).
A skeleton of the cabin is formed by a frame comprising front pillars, rear pillars and the like, and the roof is provided at the upper surface of the cabin. Transparent windshields of glass or resin (a front glass, a rear glass and the like) and a door are provided at openings of the front, rear, left and right surfaces of the cabin so as to prevent noise and outer air from entering the inside of the cabin from a bonnet (for example, see the Patent Literature 2).

Patent Literature 1 : the Japanese Patent Laid Open Gazette Hei. 6-44681
Patent Literature 2 : the Japanese Patent Laid Open Gazette 2003-175860

However, with regard to a cabin of an agricultural working machine such as a tractor or a combine or a construction machine such as a pickup truck or a dump truck, or to a room adjacent to a vibration source such as a trunk or a workroom to which an engine or another vibration source is provided, hollow resonance frequency is determined by the shape and dimensions of wall surfaces forming the space. In order to change the hollow resonance frequency, it is necessary to change the dimensions, to provide a partition in the space or the like. It is difficult to change the dimensions of the cabin substantially, and the partition provided in the cabin or the like is obstructive.
With regard to the movement of hollow resonance frequency by using acoustical dynamic vibration reduction effect, it is necessary to control the amount of the movement.
With regard to the movement of hollow resonance frequency using acoustical dynamic vibration reduction effect, the resonance frequency in the space is determined by dimensions of a resonance pipe or a resonance box. When vibration generator frequency is moved, resonance occurs at the moved frequency.
With regard to the semi-active control using acoustical dynamic vibration reduction effect, it is difficult to sense the change of the vibration generator frequency.
With regard to the construction providing an opening and closing mechanism at a throttle part controlling rotation speed of the engine (or a motor) of the working machine or the like, the engine rotation shifts when load is changed.
The vibration generator frequency not depending on the engine rotation of the working machine or the like cannot be dealt with.
When the sound field is changed, especially, in the case that the vibration source is unknown, the control only corresponding to the engine rotation may increase the sound pressure conversely.
When the sound field is changed, especially caused by opening the window or the like, the control only corresponding to the engine rotation may increase the sound pressure conversely.
By opening and closing the opening of the resonance part, the frequency can be moved only to a fixed value. The frequency of the resonance part is changed under the influence of the shape of the cabin, whereby it is difficult to change the frequency to a target value.
According to the position at which the resonance pipe or the resonance box is disposed, the resonance pipe or the resonance box may be obstructive.
The conventional resonance pipe or resonance box corresponds to only one resonance frequency
According to the position at which the resonance pipe or the resonance box is disposed, the space inside the resonance pipe or the resonance box may be insufficient, whereby the amount of the movement of the resonance frequency may be insufficient.
The resonance frequency in the space is determined by the shape and dimensions of the wall surface forming the space.

In order to change the hollow resonance frequency, it is necessary to change the dimensions, to provide a partition in the space or the like. However, it is difficult to change the dimensions substantially, and the partition provided in the space is obstructive.

The sound field is changed by the active noise control structure with the resonance pipe or the resonance box, whereby the design is complicated.

With regard to the "opening and closing member" such as the left and right doors and rear glass provided at the opening and the ventilating hatch provided at the roof of the conventional cabin, one of ends of the opening and closing member is attached through the hinge to the frame, and the other end thereof is provided thereon with a holding member (for example, a doorknob) so that the opening and closing member can be held to the frame while the member is closed.

However, the opening and closing member constructed as the above may cause "furry noise" in the cabin. Vibration caused by the working machine traveling on a rough road or vibration generated by the engine or the working machine is transmitted through the frame of the cabin to the opening and closing member. The opening and closing member is vibrated so that the capacity in the cabin is changed, whereby the air pressure in the cabin is changed. The furry noise is the change of the air pressure sensed by an operator with ears as sound pressure.

Such furry noise is unpleasant for the operator in the cabin and is mentioned as one of causes of fatigue of the operator.

Disclosure of Invention

Problems to Be Solved by the Invention

The purpose of the present invention is to change hollow resonance frequency in a cabin without changing the dimensions of the cabin and not providing any partition in the cabin. The present invention provides noise proof structure of a cabin reducing furry noise so as to improve livability and comfortability for an operator.

Means for Solving the Problems

With regard to noise proof structure of a cabin of the present invention, a resonance pipe or a resonance box resonating at frequency of hollow resonance is provided at a position at which sound pressure is high when the hollow resonance occurs.

With regard to the noise proof structure of the cabin, the resonance pipe or the resonance box can be exchanged with that having the same resonance frequency and different volume.

With regard to the noise proof structure of the cabin, a partition is provided at an opening of the resonance pipe or the resonance box so that the resonance frequency can be adjusted by opening and closing the partition.

With regard to the noise proof structure of the cabin, a throttle part controlling rotation speed of an engine of a working machine or the like having the cabin is connected interlockingly to the partition at the opening of the resonance pipe or the resonance box so that the partition is opened and closed corresponding to displacement of the throttle part.

The noise proof structure of the cabin comprises a rotary sensor measuring rotary speed of the engine of the working machine or the like having the cabin, an actuator opening and closing the partition at the opening, and a controller controlling the partition through the actuator corresponding to the rotary speed measured by the rotary sensor.

The noise proof structure of the cabin comprises a vibration sensor measuring vibration at a prescribed position in the cabin, and a controller adjustingly opening and closing the partition corresponding to a hollow vibration frequency found from the vibration measured by the vibration sensor.

The noise proof structure of the cabin comprises a microphone measuring sound pressure in vicinity of the opening, and a controller controlling the partition through the actuator so as to minimize the sound pressure in the vicinity of the opening.

With regard to the noise proof structure of the cabin, a sensor sensing a part of the cabin at which a door or a window is opened and closed is provided, and when the part is opened, the opening of the resonance pipe or the resonance box is closed.

The noise proof structure of the cabin comprises a rotary sensor measuring rotary speed of the engine of the working machine or the like having the cabin, sound pressure in the vicinity of the opening, or vibration at a prescribed position in the cabin, an actuator adjusting length of the resonance pipe or a wall surface of the resonance box, and a controller controlling the actuator opening and closing the partition corresponding to the rotary speed, the sound pressure or the vibration measured by the rotary sensor.

With regard to the noise proof structure of the cabin, the resonance pipe or the resonance box is provided at a vertex, a corner or an edge of the cabin.

With regard to the noise proof structure of the cabin, each of at least two positions in the cabin having high sound pressure and frequency different with each other is disposed thereat with the resonance pipes or the resonance boxes having the same resonance frequency.

With regard to the noise proof structure of the cabin, each of at least two positions in the cabin having high sound pressure and the same frequency mutually is disposed thereat with the resonance pipes or the resonance boxes having the same resonance frequency.

With regard to the noise proof structure of the cabin, an opening is provided at a part of the cabin and the opening is used as a resonance part.

With regard to the noise proof structure of the cabin, a dynamic vibration reducer such as a thin film is disposed at a part in the cabin at which sound pressure is high.

With regard to the noise proof structure of the cabin, a hollow is provided at an end of a part of the cabin whose dimensions are based on hollow resonance and a partition is provided at an opening of the hollow so that a sound field is changed by opening and closing the partition.

With regard to the noise proof structure of the cabin, an opening is provided at a part of a covering member covering an operation part and an opening and closing member is provided at the opening;

one of ends of the opening and closing member is attached through a hinge to the covering member;

the other end of the opening and closing member is held to the covering member by a holding member;

one or more restrained members is provided at an peripheral edge of the opening and closing member;

an restraining actuator is provided at a position facing to the restrained member in the covering member at the time of closing the opening and closing member; and

the restrained member is restrained by the restraining actuator.

With regard to the noise proof structure of the cabin, the restraining actuator is an electromagnet, the restrained member is magnetic material, and electric power is supplied to the electromagnet by a dynamo interlocked with a drive source of the working machine or the like.

With regard to the noise proof structure of the cabin, a detection means detecting that the holding member holds the opening and closing member to the covering member is provided, and the detection means is interlocked with the electromagnet.

With regard to the noise proof structure of the cabin, the opening and closing member is shaped substantially polygonal and the restrained member is provided at a vertex of the opening and closing member.

With regard to the noise proof structure of the cabin, the opening and closing member is shaped substantially polygonal and the restrained member is provided at a substantial center of a side of the opening and closing member.

With regard to the noise proof structure of the cabin, an elastic member is interposed between the restrained member and the opening and closing member.

**Effect of the Invention**

A resonance pipe or a resonance box resonating at the frequency of hollow resonance is provided at a position at which sound pressure is high when the hollow resonance occurs.

Accordingly, the hollow resonance frequency can be moved by acoustic dynamic vibration reduction effect. The increase of noise caused by hollow resonance is prevented without changing the shape of the wall surface widely, whereby furry noise is reduced.

The resonance pipe or the resonance box can be exchanged with that having the same resonance frequency and different volume.

Accordingly, by increasing the amount of movement of the frequency following the increase of volume, the resonance phenomenon can be reduced efficiently. Namely, the movement of the resonance frequency is increased so as to reduce furry noise remarkably.

A partition is provided at an opening of the resonance pipe or the resonance box so that the resonance frequency can be adjusted by opening and closing the partition.

By opening and closing the partition of the opening of the resonance pipe or the resonance box, the hollow resonance frequency is changed. Accordingly, by opening and closing the partition following the change of vibration generator frequency, the resonance phenomenon can be prevented efficiently.

A throttle part controlling rotation speed of an engine of a working machine or the like having the cabin is connected interlockingly to the partition at the opening of the resonance pipe or the resonance box so that the partition is opened and closed corresponding to displacement of the throttle part.

The vibration generator frequency caused by the engine rotation of the working machine or the like is known. Accordingly, by changing the resonance frequency interlockingly therewith, the resonance phenomenon can be prevented efficiently.

A rotary sensor measuring rotary speed of the engine of the working machine or the like having the cabin, an actuator opening and closing the partition at the opening, and a controller controlling the partition through the actuator corresponding to the rotary speed measured by the rotary sensor are provided.

Accordingly, the resonance frequency can be changed efficiently corresponding to the change of the engine rotation speed of the working machine or the like following the change of load.

A vibration sensor measuring vibration at a prescribed position in the cabin, and a controller adjustingly opening and closing the partition corresponding to a hollow vibration frequency found from the vibration measured by the vibration sensor are provided.

Accordingly, the resonance caused by the hollow resonance can be prevented even if the vibration source is unknown.

A microphone measuring sound pressure in vicinity of the opening, and a controller controlling the partition through the actuator so as to minimize the sound pressure in the vicinity of the opening are provided.

Accordingly, the resonance caused by the hollow resonance can be prevented even if the vibration source is unknown.

A sensor sensing a part of the cabin at which a door or a window is opened and closed is provided, and when the part is opened, the opening of the resonance pipe or the resonance box is closed.

Accordingly, the resonance pipe or the resonance box is prevented from generating noise conversely in the case that the door or the window is opened.

A rotary sensor measuring rotary speed of the engine of the working machine or the like having the cabin, sound pressure in the vicinity of the opening, or vibration at a prescribed position in the cabin, an actuator adjusting length of the resonance pipe or a wall surface of the resonance box, and a controller controlling the actuator opening and closing the partition corresponding to the rotary speed, the sound pressure or the vibration measured by the rotary sensor are provided.

By changing fundamental frequency of the resonance pipe or the resonance box, the amount of movement of the frequency is changed. Namely, by using the resonance pipe or the resonance box having slightly lower frequency than the hollow resonance frequency, the frequency is moved to the lower side widely. In the opposite case, the frequency is moved to the higher side. Accordingly, the matching corresponding to the vibration generator frequency can be performed.

The resonance pipe or the resonance box is provided at a vertex, a corner or an edge of the cabin.

Accordingly, the resonance pipe or the resonance box can be disposed without obstructing the living space. It is especially effective for the resonance of low frequency, and is effective to reduce noise resultingly.

Each of at least two positions in the cabin having high sound pressure and frequency different with each other is disposed thereat with the pipes or the resonance boxes having the same resonance frequency.

Accordingly, with regard to two or more frequencies, it is especially effective for the resonance of low frequency similarly as mentioned above, and is effective to reduce noise resultingly.

Each of at least two positions in the cabin having high sound pressure and the same frequency mutually is disposed thereat with the resonance pipes or the resonance boxes having the same resonance frequency.

Accordingly, the amount of movement of the frequency is increased so as to enhance the improvement effect. In this case, a lot of small resonance pipes or resonance boxes can be fixed to the end of the cabin, whereby furry noise can be reduced without obstructing the living space of an operator.

An opening is provided at a part of the cabin and the opening is used as a resonance part.

Accordingly, the resonance pipe or the resonance box can be disposed without obstructing the living space. It is not necessary to provide any resonance pipe or resonance box separately, whereby the cost is reduced.

A dynamic vibration reducer such as a thin film is disposed at a part in the cabin at which sound pressure is high.

Accordingly, the structure system resonates as a dynamic vibration reducer so as to move the hollow resonance frequency.

A hollow is provided at an end of a part of the cabin whose dimensions are based on hollow resonance and a partition is provided at an opening of the hollow so that a sound field is changed by opening and closing the partition.

Accordingly, the sound field can be changed without providing any resonance pipe or resonance box separately, whereby the design is simplified.

An opening is provided at a part of a covering member covering an operation part and an opening and closing member is provided at the opening;

one of ends of the opening and closing member is attached through a hinge to the covering member;

the other end of the opening and closing member is held to the covering member by a holding member;

one or more restrained members is provided at an peripheral edge of the opening and closing member;

an restraining actuator is provided at a position facing to the restrained member in the covering member at the time of closing the opening and closing member; and

the restrained member is restrained by the restraining actuator.

Accordingly, the generation of furry noise in the cabin can be reduced, whereby livability and comfortability for an operator is improved.

The restraining actuator is an electromagnet, the restrained member is magnetic material, and electric power is supplied to the electromagnet by a dynamo interlocked with a drive source of the working machine or the like.

Accordingly, when electric power is not supplied, the opening and closing member can be opened and closed by an operator with small power.

A detection means detecting that the holding member holds the opening and closing member to the covering member is provided, and the detection means is interlocked with the electromagnet.

Accordingly, the electromagnet restrains the restrained member only by closing the opening and closing member while the engine works without any special operation by an operator, whereby the workability is improved.

The opening and closing member is shaped substantially polygonal and the restrained member is provided at a vertex of the opening and closing member.

Accordingly, the number of position at which the opening and closing member is fixed to the restrained member of the cabin by restraining the restrained member by the restraining actuator can be minimize so as to reduce the generation of furry noise efficiently.

The opening and closing member is shaped substantially polygonal and the restrained member is provided at a substantial center of a side of the opening and closing member.

Accordingly, the number of position at which the opening and closing member is fixed to the restrained member of the cabin by restraining the restrained member by the restraining actuator can be minimize so as to reduce the generation of furry noise efficiently.

An elastic member is interposed between the restrained member and the opening and closing member.

Accordingly, the vibration of the opening and closing member can be reduced so as to prevent the generation of furry noise.


Brief Description of Drawings


[Fig. 1] Fig. 1 is a schematic perspective view of a conventional cabin 1.

[Fig. 2] Fig. 2 is a schematic perspective view of a cabin 1 concerning the first embodiment of noise proof structure of a cabin according to the present invention.

[Fig. 3] Fig. 3 is a schematic right side view of the same.

[Fig. 4] Fig. 4 is a schematic right side view of the cabin 1 of another embodiment.

[Fig. 5] Fig. 5 is a schematic right side view of the cabin 1 of another embodiment.

[Fig. 6] Fig. 6 is a schematic right side view of the cabin 1 of another embodiment.

[Fig. 7] Fig. 7 is a schematic right side view of the cabin 1 of another embodiment.

[Fig. 8] Fig. 8 is a schematic perspective view of the cabin 1 concerning the second embodiment.

[Fig. 9] Fig. 9 is a schematic right side view of the cabin 1 of another embodiment.

[Fig. 10] Fig. 10 is a schematic right side view of the cabin 1 concerning the third embodiment while a partition 41 is opened.

[Fig. 11] Fig. 11 is a schematic right side view of the same cabin 1 while the partition 41 is closed.

[Fig. 12] Fig. 12 is a schematic right side view of the cabin 1 concerning another embodiment while the partition 41 is opened.

[Fig. 13] Fig. 13 is a schematic right side view of the same cabin 1 while the partition 41 is closed.

[Fig. 14] Fig. 14 is a schematic perspective view of the vicinity of the cabin 1 concerning the fifth embodiment.

[Fig. 15] Fig. 15 is a schematic right side view of the cabin 1 of another embodiment.

[Fig. 16] Fig. 16 is a schematic right side view of the cabin 1 of another embodiment.

[Fig. 17] Fig. 17 is a schematic right side view of another embodiment.

[Fig. 18] Fig. 18 is a schematic perspective view of the cabin 1 concerning the sixth embodiment.

[Fig. 19] Fig. 19 is a schematic right side view of the same cabin 1 while a wall surface 30a is moved.

[Fig. 20] Fig. 20 is a schematic right side view of the cabin 1 of another embodiment.

[Fig. 21] Fig. 21 is a schematic right side view of the same cabin 1 while a bottom surface 31a is moved.

[Fig. 22] Fig. 22 is a schematic right side view of the cabin 1 of another embodiment.

[Fig. 23] Fig. 23 is a schematic right side view of the same cabin 1 while a slide barrel 32a is moved.

[Fig. 24] Fig. 24 is a schematic perspective view of the cabin 1 showing the first sound field.

[Fig. 25] Fig. 25 is a schematic perspective view of the cabin 1 showing the second sound field.

[Fig. 26] Fig. 26 is a schematic perspective view of the cabin 1 showing the third sound field.

[Fig. 27] Fig. 27 is a schematic perspective view of the cabin 1 concerning the seventh embodiment.

[Fig. 28] Fig. 28 is a schematic perspective view of the cabin 1 of another embodiment.

[Fig. 29] Fig. 29 is a schematic perspective view of the cabin 1 of another embodiment.

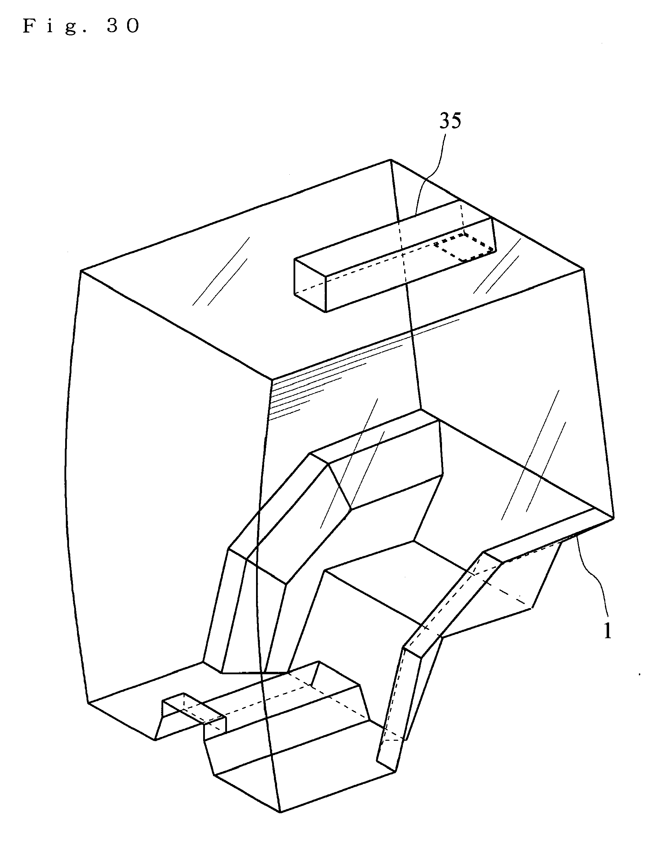

[Fig. 30] Fig. 30 is a schematic perspective view of the cabin 1 of another embodiment.

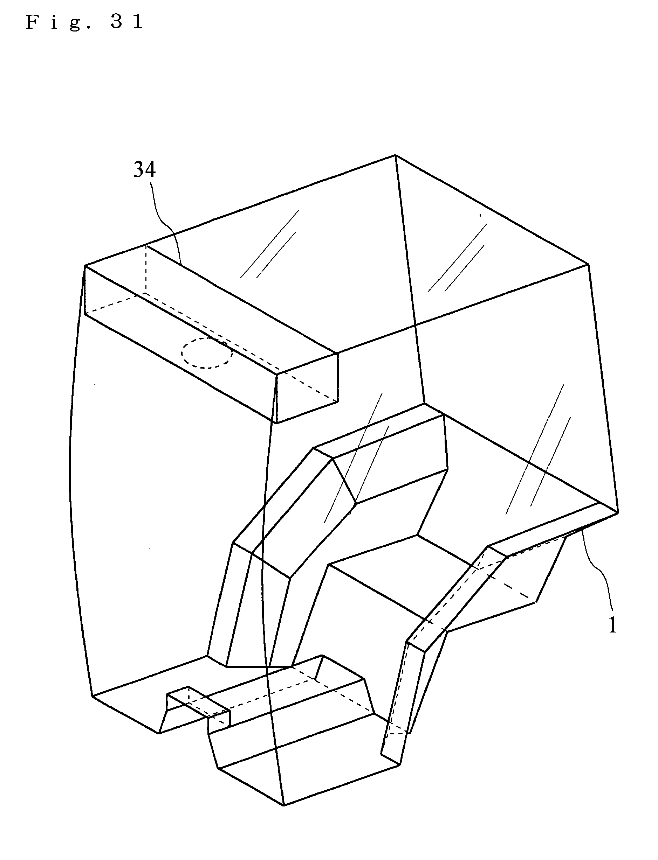

[Fig. 31] Fig. 31 is a schematic perspective view of the cabin 1 of another embodiment.

[Fig. 32] Fig. 32 is a schematic perspective view of the cabin 1 concerning the eighth embodiment.

[Fig. 33] Fig. 33 is a schematic right side view of another embodiment.

[Fig. 34] Fig. 34 is a schematic right side view of another embodiment.

[Fig. 35] Fig. 35 is a schematic right side view of another embodiment.

[Fig. 36] Fig. 36 is a schematic right side view of another embodiment.

[Fig. 37] Fig. 37 is a schematic right side view of another embodiment.

[Fig. 38] Fig. 38 is a schematic right side view concerning the ninth embodiment.

[Fig. 39] Fig. 39 is a schematic drawing of the cabin 1 showing the dimensional direction influencing frequency of furry noise.

[Fig. 40] Fig. 40 is a schematic right side view of the cabin 3 concerning the tenth embodiment.

[Fig. 41] Fig. 41 is a schematic right side view of the cabin 3 of another embodiment.

[Fig. 42] Fig. 42 is a left side view of a tractor as an embodiment of the working machine having the cabin according to the eleventh embodiment of the present invention.

[Fig. 43] Fig. 43 is an exploded perspective view of frames of the cabin.

[Fig. 44] Fig. 44 is a side view of the first embodiment of a door.

[Fig. 45] Fig. 45 is a schematic front view of the first embodiment of the door.

[Fig. 46] Fig. 46 is a schematic front view of the second embodiment of the door.

[Fig. 47] Fig. 47 is a schematic front view of the third embodiment of the door.

Description of Notations

| | |
|---|---|
| 1 | a cabin |
| 3 | a cabin |
| 2a | a side branch type resonance pipe |
| 2b | a Helmholtz type resonance box |
| 41 | a partition |
| 42 | an accelerator |
| 43 | a wire |
| 44 | a rotary sensor |
| 45 | a controller |
| 46 | an actuator |
| 47 | an open-close sensor |
| 49 | a dynamic vibration reducer |
| 51 | a vibration sensor |
| 51 a | a microphone |
| 63 | holding members |
| 65a, 65b, 65c, 65d, 65e, 65f | restrained members |
| 75a, 75b, 75c, 75d, 75e, 75f | permanent magnets |
| 112 | a cabin |
| 150 | doors (opening and closing members) |
| 162 | hinges |
| 201 | a tractor (working machine or the like) |

The Best Mode for Carrying out the Invention

Hereinafter, explanation will be given on the mode for carrying out the present invention according to drawings. With regard to a working machine which a control part thereof is covered by a cabin, such as tractor, when an engine is started, the rotation vibration of the engine makes a cabin 1 vibrate even if the cabin 1 is supported vibration-proofly. Noise is also caused. The vibration causes noise, and standing wave is generated in the cabin 1 so that furry noise is generated. The standing wave is generated corresponding to the dimensions of the cabin. Namely, the frequency of the standing wave is determined by the longitudinal and lateral length of the inside of the cabin.

In this embodiment, explanation will be given with the cabin 1. However, a machine to which the present invention is adopted is not limited to an agricultural working machine such as a tractor or a combine. With regard to a cabin of a construction machine such as a pickup truck or a dump truck, or to a room adjacent to a vibration source such as a trunk or a workroom to which an engine or another vibration source is provided, the same effect as this embodiment can be obtained.

[Embodiment 1]

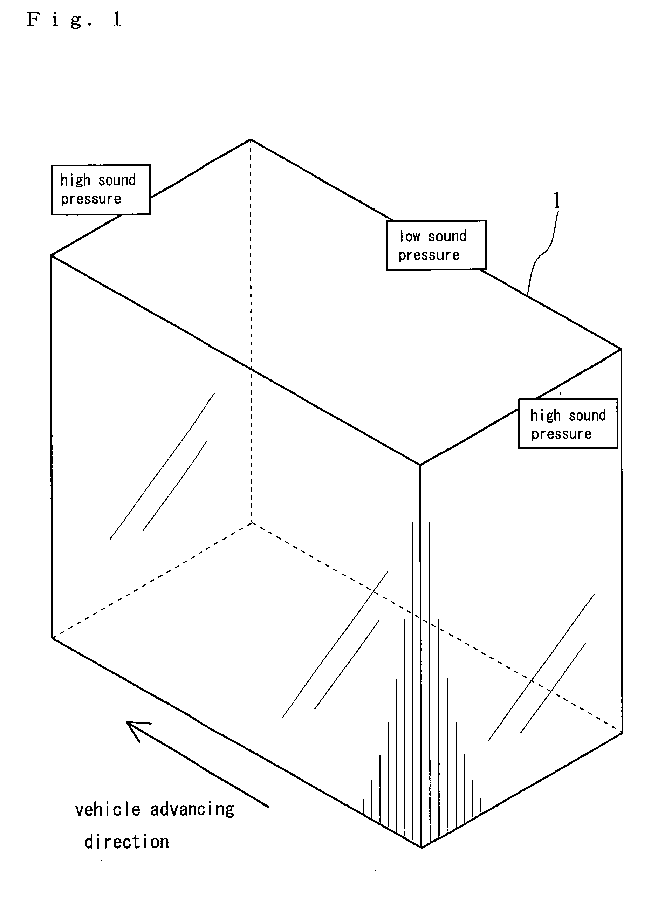

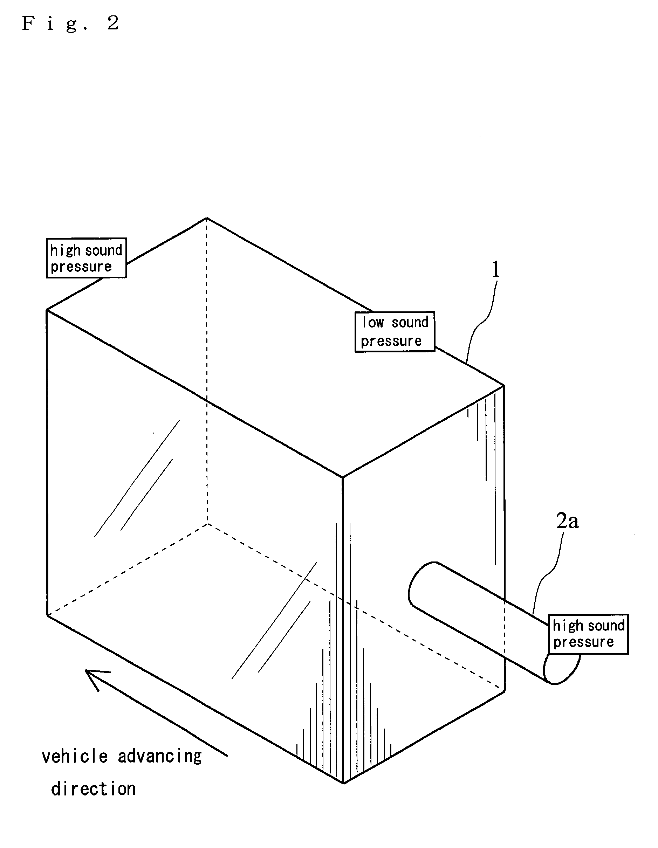

When standing wave is generated in the cabin 1 so that furry noise is generated, as shown in Fig. 1, with regard to the box-shaped cabin, sound pressure is highest in the vicinity of the wall and is low at the center of the cabin 1. In this case, when a resonator 2 such as a resonance pipe 2a or a resonance box 2b is disposed on the wall surface as shown in Figs. 2 to 4, air vibrating in the vicinity of the wall surface of the cabin 1 at the same frequency as the resonance frequency of the resonator 2 and having high sound pressure level makes air in the resonator 2 vibrate. As a result, the air in the cabin 1 has consumed energy for transmitting the vibration to the air in the resonator 2. Accordingly, the vibration in the cabin 1 is reduced for the consumed energy, whereby the furry noise is reduced.

When the resonator 2 is disposed on the cabin 1, by the effect of the resonator, the resonance frequency is changed from that of the cabin 1 not having the resonator 2. For example, when the resonance frequency of the cabin 1 not having the resonator 2 in Fig. 1 is 131Hz, the resonance frequency is changed to 117Hz and 136Hz by adding the resonance pipe 2a as shown in Fig. 2. In this case, as mentioned above, energy of the air in the cabin 1 is transmitted to the air in the resonance pipe 2a and the resonance frequency is increased to two. The sound pressure of two resonance frequencies of 117Hz and 136Hz may be lower than the sound pressure of the resonance frequency of 131Hz depending on the measurement position.

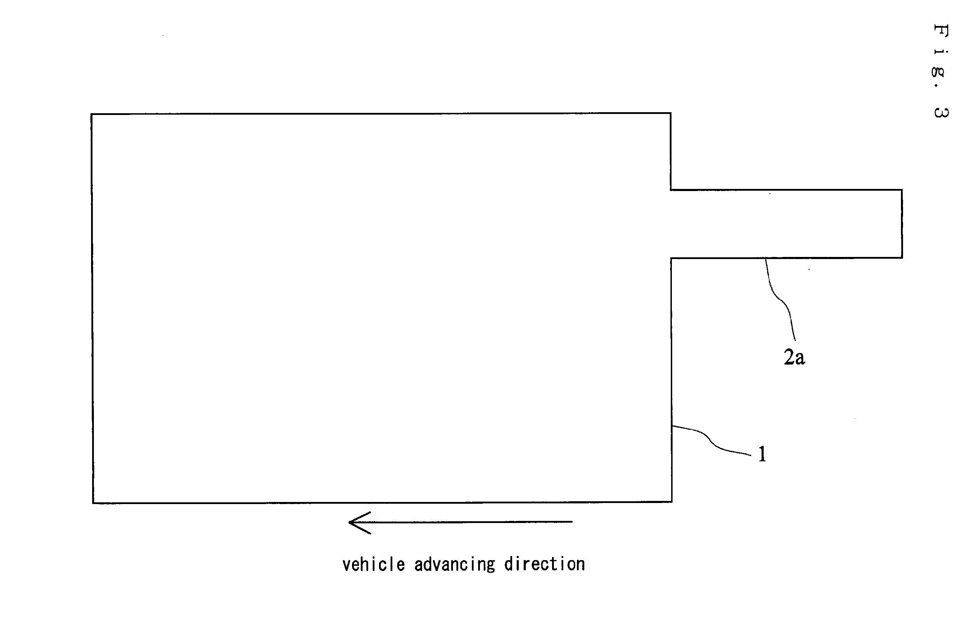

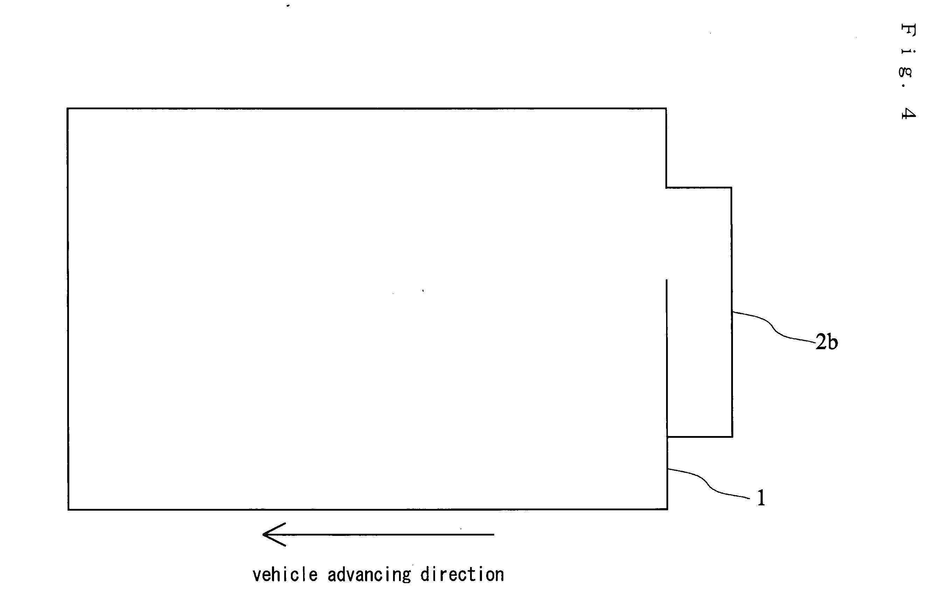

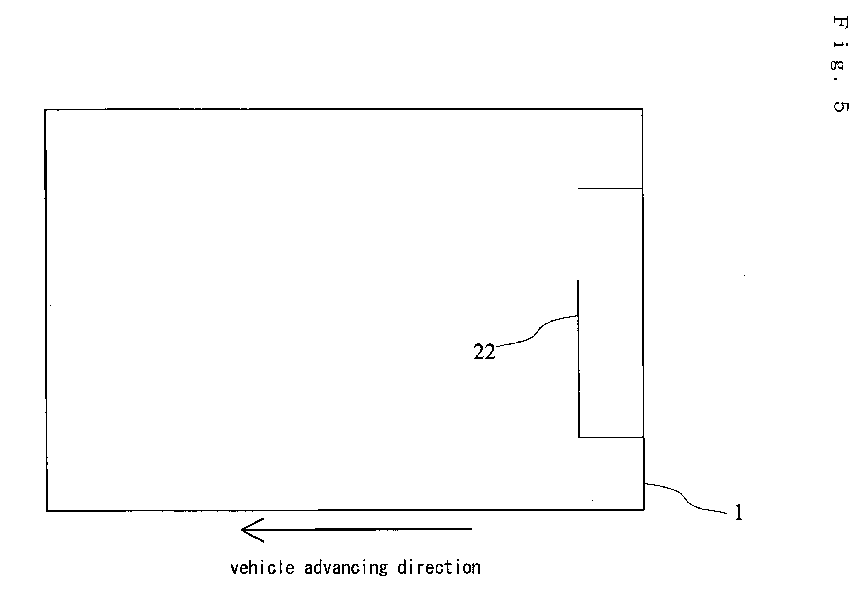

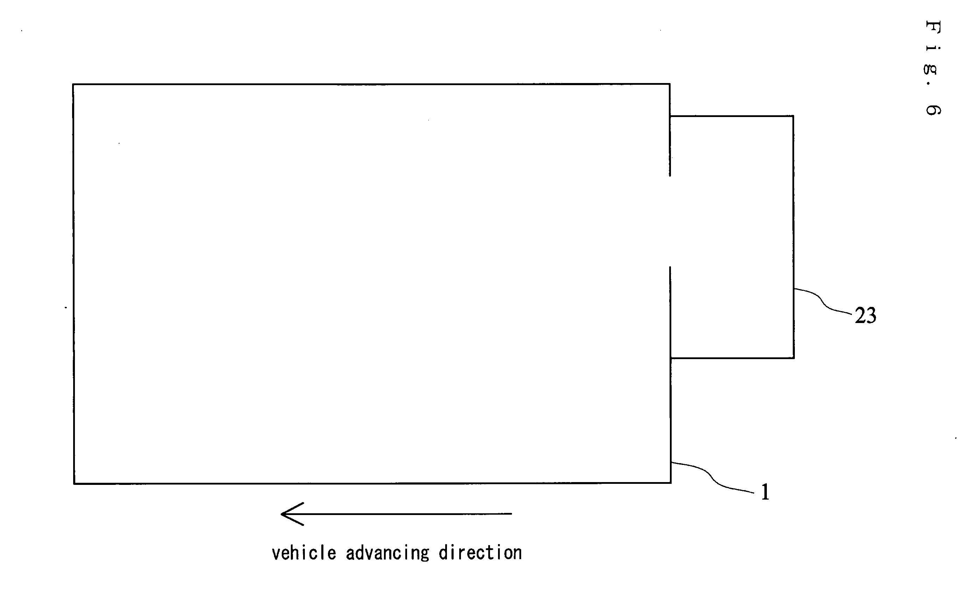

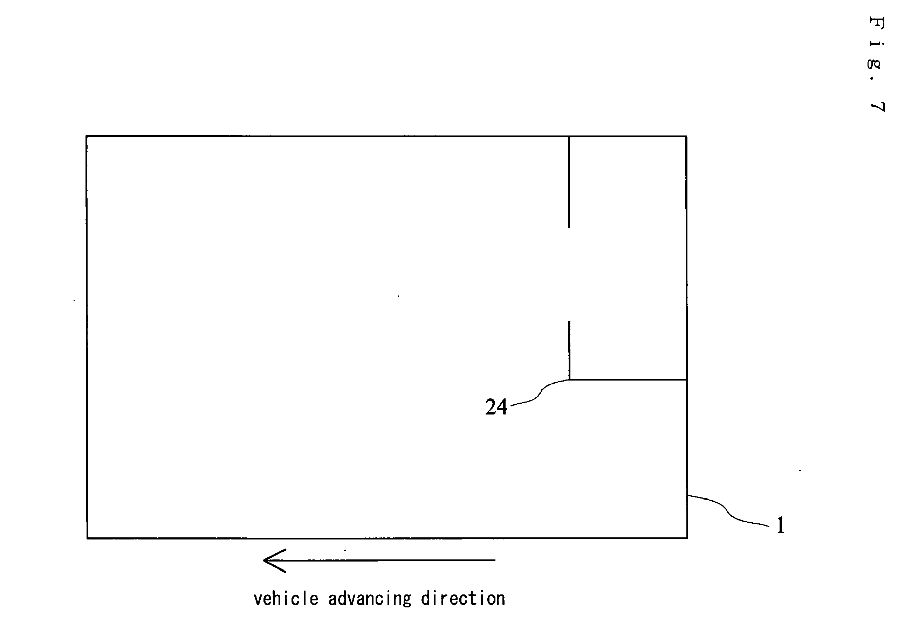

In Fig. 3, the side branch type resonance pipe 2a as the resonator 2 is disposed to the outside of the cabin 1 so that the major axis of the resonance pipe 2a is rectangular to the wall surface of the cabin 1 having high sound pressure level. However, as shown in Fig. 4, the resonance box 2b may alternatively be disposed to the outside of the cabin 1 so that the major axis of the resonance box 2b is in parallel to the wall surface of the cabin 1. Otherwise, as shown in Fig. 5, a side branch type resonator 22 may alternatively be disposed to the inside of the cabin 1 so that the major axis of the resonator 22 is in parallel to the wall surface of the cabin 1 having high sound pressure level. As shown in Fig. 6, a Helmholtz type resonator 23 may alternatively be disposed to the outside of the wall surface of the cabin 1 having high sound pressure level. As shown in Fig. 7, a Helmholtz type resonator 24 may alternatively be disposed to the inside of the wall surface of the cabin 1 having high sound pressure level. In addition, the wall surfaces having high sound pressure level are front and rear, left and right or upper and lower two surfaces, and are determined corresponding to the shape of the cabin and the position of the engine.

The resonance pipe 2a or the resonance box 2b resonating at the frequency of hollow resonance is provided at a position at which sound pressure is high when the hollow resonance occurs.

Accordingly, the hollow resonance frequency can be moved by acoustic dynamic vibration reduction effect. The increase of noise caused by hollow resonance is prevented without changing the shape of the wall surface widely, whereby furry noise is reduced.

[Embodiment 2]

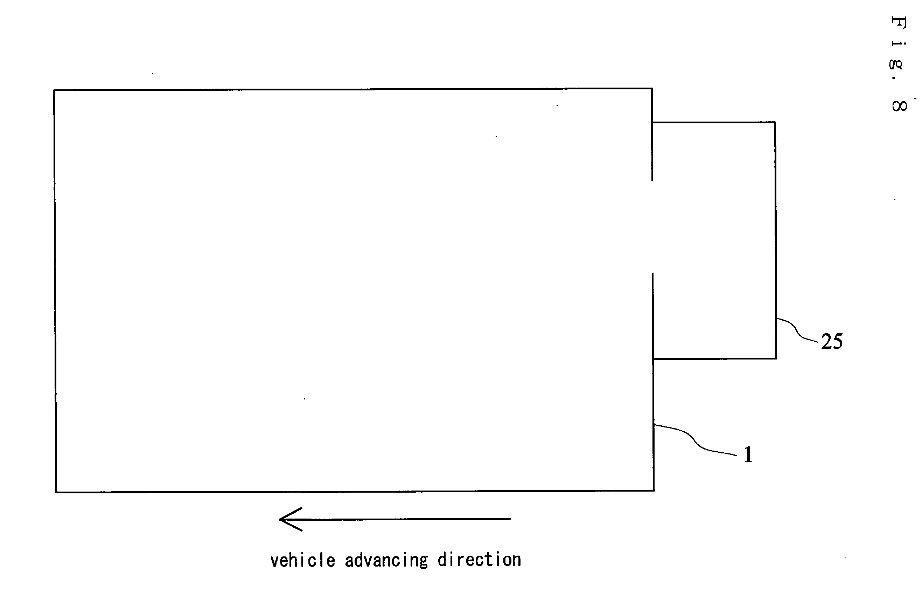

Next, explanation will be given on the second embodiment concerning the noise proof structure of the cabin according to the present invention. The furry noise may not be reduced to the desired level though the resonator 23 is disposed to the cabin of the working machine or the like. In this case, as shown in Fig. 8, a resonator 25 having the same resonance frequency and larger volume is attached to the cabin 1 so as to be able to be exchanged, whereby transfer amount of the frequency is increased.

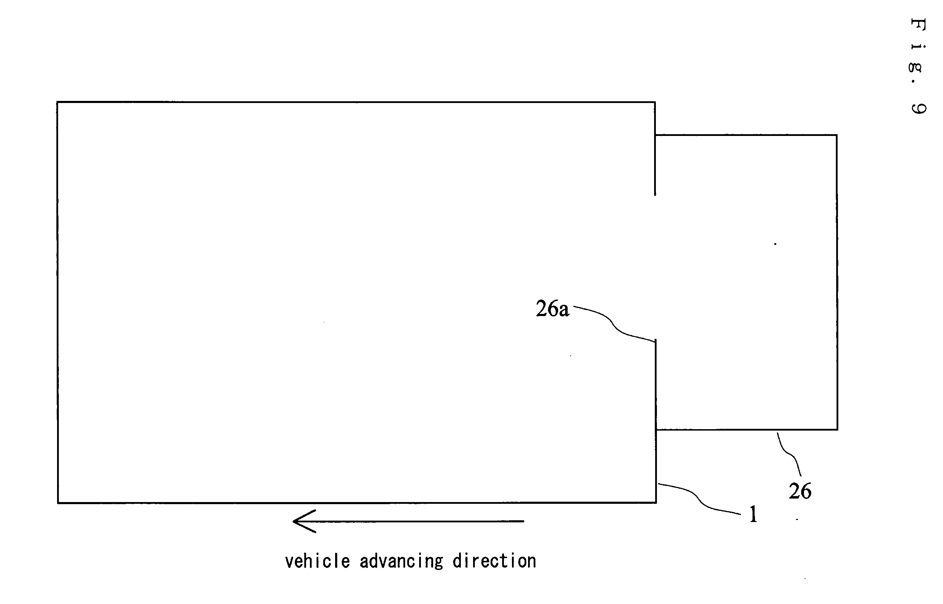

Herein, when a Helmholtz type resonator 26 is disposed to the cabin 1 as shown in Fig. 9, an opening 26a of the resonator 26 is also changed corresponding to the volume of the resonator 26.

The resonance pipe or the resonance box can be exchanged with the resonance pipe or the resonance box 26 having the same resonance frequency and different volume.

Accordingly, by increasing the amount of movement of the frequency following the increase of volume, the resonance phenomenon can be reduced efficiently. Namely, the movement of the resonance frequency is increased so as to reduce furry noise remarkably.

[Embodiment 3]

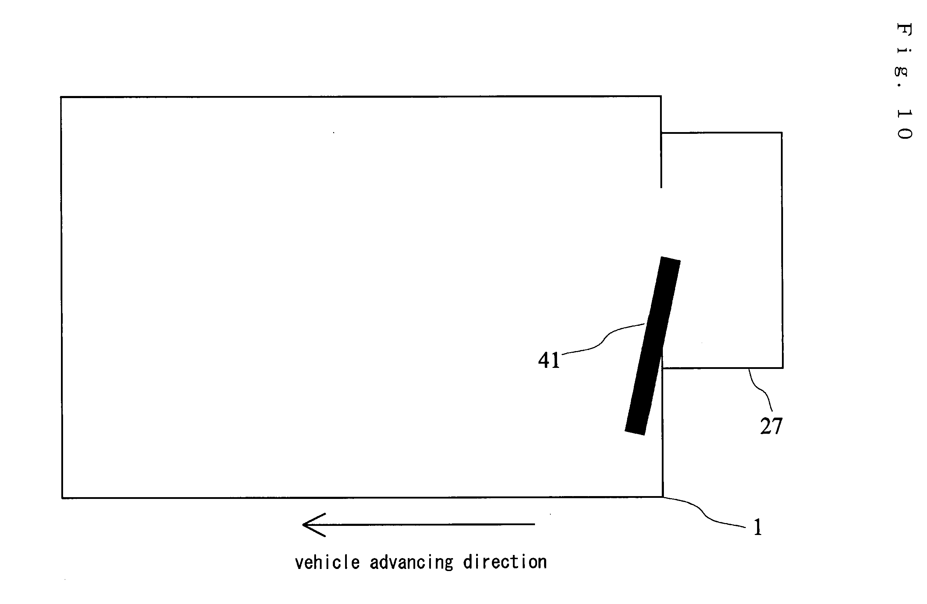

Next, explanation will be given on an opening of a Helmholtz type resonator 27, which connects the cabin 1 to the resonator 27, as the third embodiment according to Figs. 10 to 13.

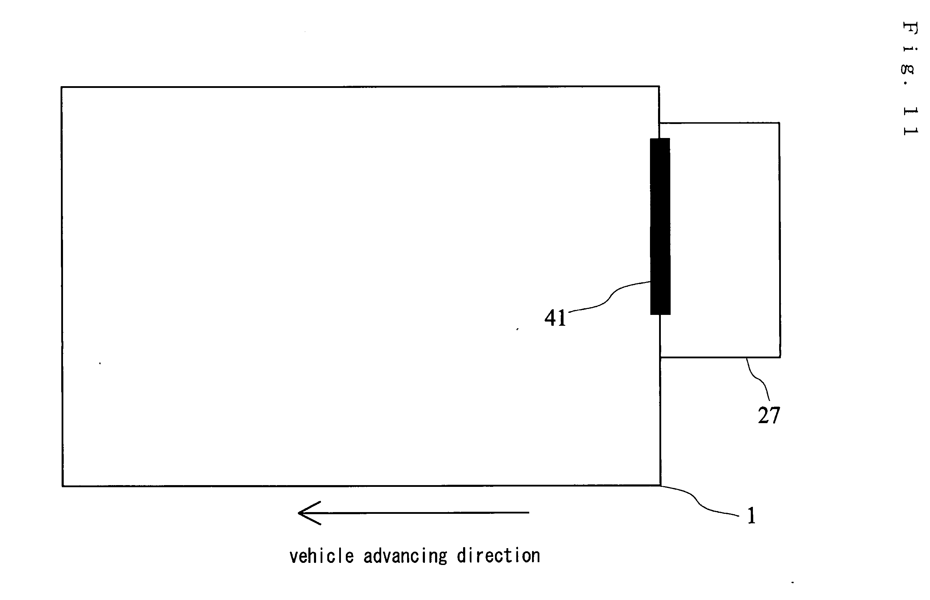

As shown in Figs. 10 and 11, a partition 41 is disposed at the opening of the resonator 27 so as to be able to be opened and closed. For making the partition 41 able to be opened and closed, the partition 41 may be slide type or be a pivoted door centering on the edge of the opening. Accordingly, the partition 41 is opened and closed.

Well, resonance frequency fs of a side branch type resonator is explained by below formula.

$$fs = C/4l$$

C = sound velocity, 1= length (depth) of resonator
Resonance frequency fh of a Helmholtz type resonator is explained by below formula.

$$fh = (C/2\pi)*(A/Vl)/2$$

C = sound velocity, A = area of opening, 1 = equivalent length (depth) of neck of resonator, V = volume of resonator
Accordingly, in the case of disposing the Helmholtz type resonator 27 to the cabin 1, the frequency to be reduced by the resonator 27 can be changed by changing the area A of the opening.

In this embodiment, as shown in Figs. 10 and 11, the opening can be opened and closed by making the partition 41 slidable or the like. Accordingly, the resonator 27 is closed normally and opened at the time that the engine vibrating frequency is being in agreement with the hollow resonance frequency in the cabin so as to change the hollow resonance frequency, whereby the hollow resonance is not caused. Furthermore, the area A of the opening can be changed. Even if the engine vibrating frequency is changed by the temperature at the outside of the vehicle, the weight of the vehicle, the rotation speed of the engine or the like, the reduction effect of furry noise can be improved by adjusting the area A of the opening.
Concretely, when the vibrating frequency becomes higher compared with the hollow resonance frequency, the partition 41 is moved to be opened so as to increase fh, that is, to increase the area A of the opening, whereby furry noise reduction effect is enhanced. On the contrary, when the vibrating frequency becomes lower, the partition 41 is moved to be closed so as to decrease fh, that is, to decrease the area A of the opening, whereby furry noise reduction effect is enhanced. In addition, for example, rails are provided at the upper and lower edges of the opening of the wall so as to make the partition 41 slidable and a handle or the like is interposed between the partition 41 and the wall, whereby the partition 41 is moved to the desired position by rotating the handle so as to change the area of the opening.

The partition 41 is provided at an opening of the resonance pipe or the resonance box 27 so that the resonance frequency can be adjusted by opening and closing the partition 41.
Accordingly, the resonance phenomenon can be prevented efficiently.

[Embodiment 4]

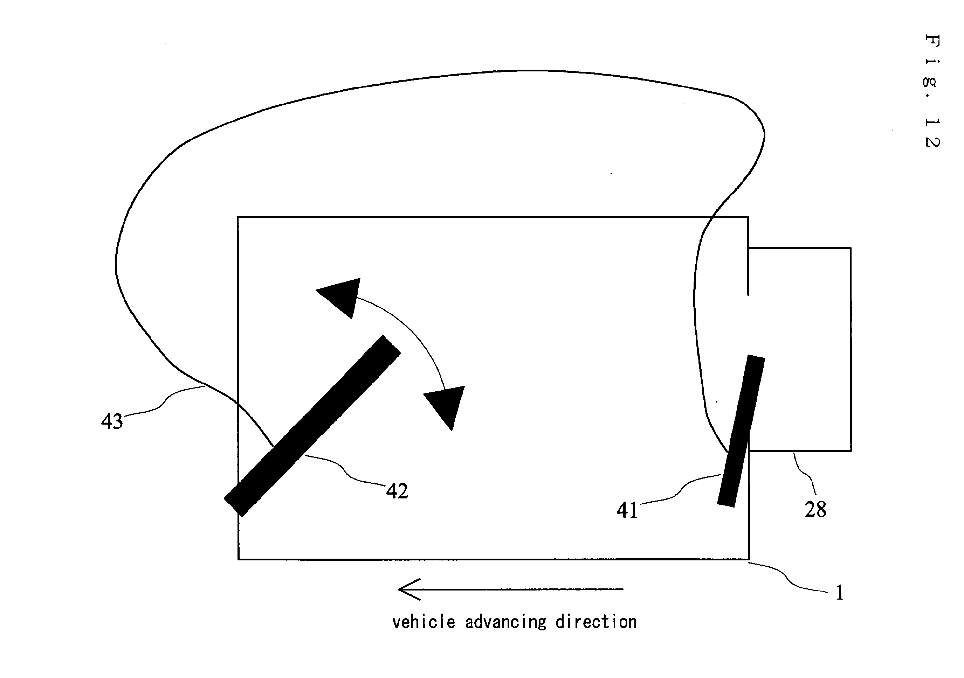

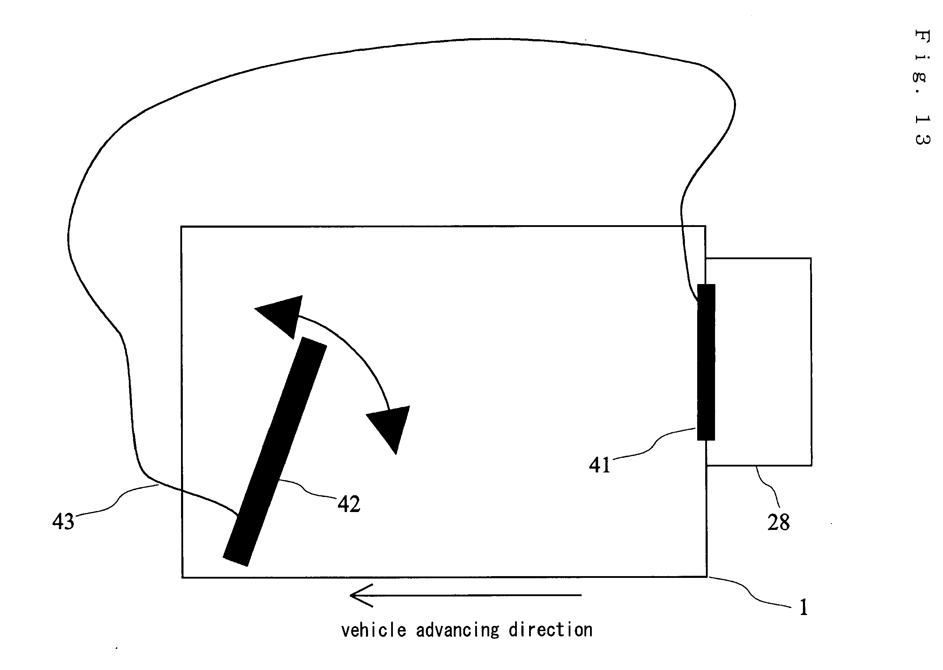

Next, explanation will be given on the fourth embodiment concerning the noise proof structure of the cabin according to the present invention.
An operator in the cabin may open and close the partition 41 directly. However, as shown in Figs. 12 and 13, it may alternatively be constructed so that one of ends of a wire 43 is connected to an accelerator 42 controlling the rotary speed of the engine and the other end thereof is connected to the partition 41, whereby the area A of the opening is changed corresponding to the rotary speed.
When the rotary speed of the engine is increased, the vibrating frequency is also increased. When the rotary speed of the engine is decreased, the vibrating frequency is also decreased. Accordingly, the wire 43 is connected so that the area A of the opening is increased by treading an accelerator pedal and the area A of the opening is decreased by releasing an accelerator pedal. Otherwise, the resonator may be constructed to be opened only at the engine rotary speed causing the hollow resonance.

The throttle part 42 controlling rotation speed of an engine of a working machine or the like having the cabin is connected interlockingly to the partition 41 at the opening of the resonance pipe or the resonance box 28 so that the partition 41 is opened and closed corresponding to displacement of the throttle part 42.
The vibration generator frequency caused by the engine rotation of the working machine or the like is known. Accordingly, by changing the resonance frequency interlockingly therewith, the resonance phenomenon can be prevented efficiently.

[Embodiment 5]

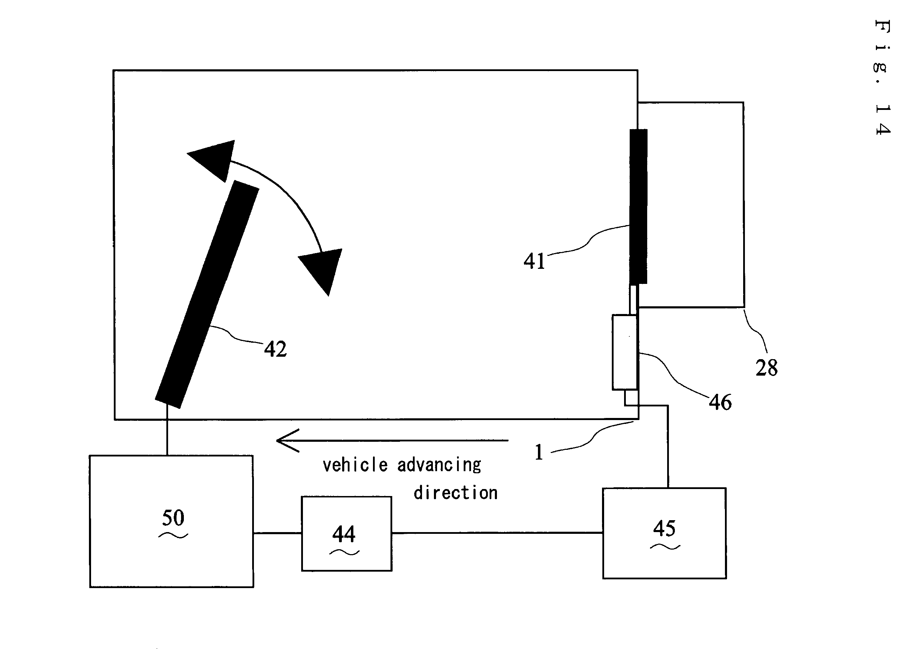

Next, explanation will be given on an art for making the opening and closing of the partition 41 correspond to the vibrating frequency as the fifth embodiment. Explanation will be given on a control method using a rotary sensor 44 measuring the rotary speed of the engine 50 and an actuator 46 opening and closing the partition 41 according to Fig. 14. With regard to the working machine such as a tractor, the engine 50 is often disposed before or below the cabin 1. The rotary sensor 44 is equipped with the engine 50 and continuously measures the rotary speed of the engine. The actuator 46 comprising a solenoid, a motor or the like is connected to the partition 41 so that the partition 41 is opened and closed by the actuator 46. The rotary sensor 44 and the actuator 46 are interlockingly connected to each other through a controller 45, and the controller 45 actuates the actuator 46 corresponding to the rotary speed of the engine 50 so as to open and close the partition 41.

In this embodiment, when the rotary speed of the engine 50 detected by the rotary sensor 44 becomes high, the controller 45 may instruct the actuator 46 to open the partition 41. Also, when the rotary speed of the engine 50 detected by the rotary sensor 44 becomes low, the controller 45 may instruct the actuator 46 to close the partition 41.

The rotary sensor 44 measuring rotary speed of the engine 50 of the working machine or the like having the cabin, the actuator 46 opening and closing the partition 41 at the opening, and the controller 45 controlling the partition 41 through the actuator 46 corresponding to the rotary speed measured by the rotary sensor 44 are provided. Accordingly, the resonance frequency can be changed efficiently corresponding to the change of the rotation speed of the engine 50 of the working machine or the like following the change of load.

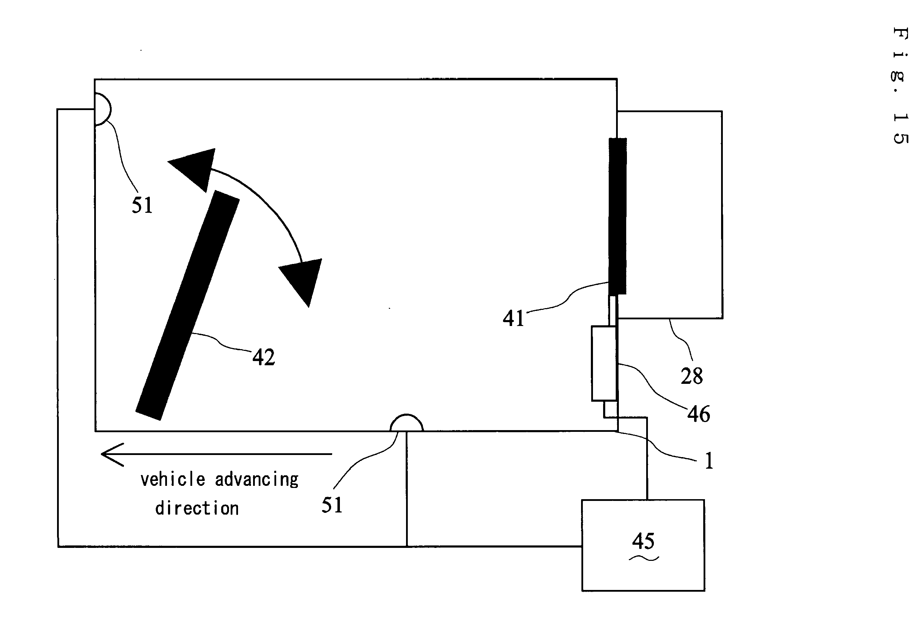

Though vibration is caused in the cabin 1, the vibration source may be unknown in where it is. Then, as shown in Fig. 15, the vibrations at representative points in the cabin 1 are measured directly. Vibration sensors 51 are disposed at the representative points. When the vibration of the hollow resonance frequency with no resonator is large, the partition 41 of the opening is opened so as to change the hollow resonance frequency. In this case, when the measured resonance frequency at the representative point in the cabin 1 is large, the partition 41 may be opened widely so as to increase the area A of the opening. Also, when the resonance frequency is small, the partition 41 may be adjusted so as to decrease the area A of the opening.

The vibration sensor 51 measuring vibration at a prescribed position in the cabin 1, and the controller 45 adjusting opening and closing the partition corresponding to a hollow vibration frequency found from the vibration measured by the vibration sensor are provided. Accordingly, the resonance caused by the hollow resonance can be prevented even if the vibration source is unknown.

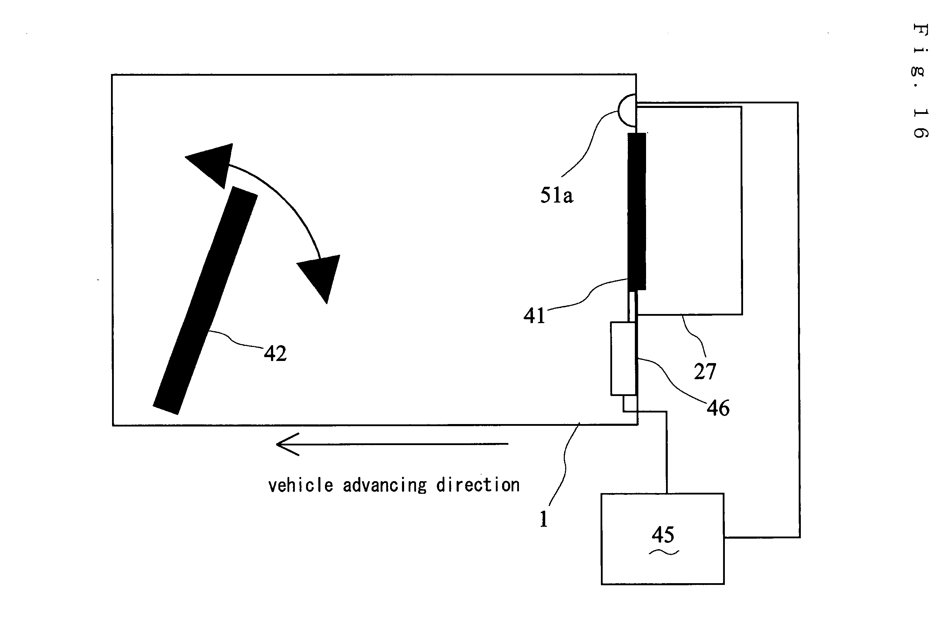

Similarly to the case that the vibration source is unknown, the change of the sound field may be unknown. Then, as shown in Fig. 16, the partition 41 of the opening is opened and closed while measuring the sound pressure in the vicinity of the opening of a resonator 28. Additionally, the position of the partition 41 most reducing furry noise may be found. In this case, the partition 41 may be opened and closed for a fixed time so as to find the position of the partition 41 at which furry noise is reduced most each time. Otherwise, at the voluntary time such as the time that an operator feel furry noise noisy, the partition 41 may be opened and closed or the position of the partition 41 most reducing furry noise may be found.

The microphone 51a measuring sound pressure in vicinity of the opening, and the controller 45 controlling the partition 41 through the actuator 46 so as to minimize the sound pressure in the vicinity of the opening are provided. Accordingly, the resonance caused by the hollow resonance can be prevented even if the vibration source is unknown.

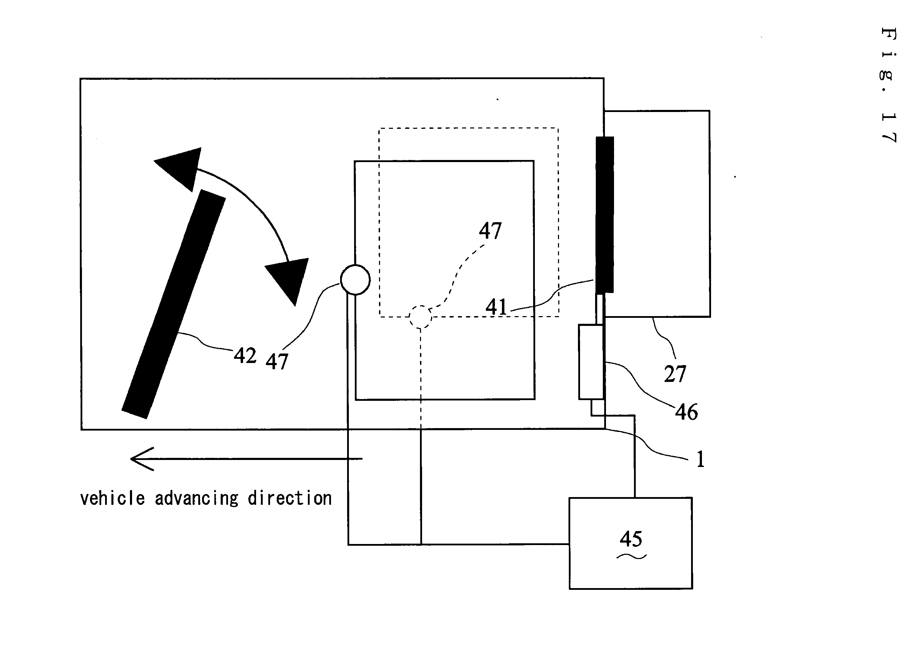

The above-mentioned change of the sound field is notably caused especially at the time that a door 61 or a window 62 is opened and closed. Accordingly, it is necessary to pick up the change of the sound caused by opening the window so as to reduce furry noise efficiently. Then, as shown in Fig. 17, open-close sensors 47 are disposed at the moving parts of the door 61 or the window 62 so as to sense the opening and closing of the space in the cabin 1. Then, only at the time that the cabin 1 is closed fully, a resonator 29 is actuated, that is, the partition 41 is opened.

The resonator 29 is actuated as mentioned above. Namely, the result sensed by the open-close sensors 47 is transmitted to the controller 45 and the controller 45 judges whether the cabin 1 is closed fully or not. When the cabin 1 is closed fully, the partition 41 is opened by the actuator 46, or the position of the partition 41 most reducing furry noise is found. Then, when at least one of the open-close sensors 47 detects the opening of the moving part, the partition 41 is closed by the controller 45 and the actuator 46.

The open-close sensors 47 sensing the part of the cabin 1 at which the door 61 or the window 62 is opened and closed are provided, and when the part is opened, the opening of the resonance pipe or the resonance box 29 is closed. Accordingly, the resonance pipe or the resonance box 29 is prevented from generating noise conversely in the case that the door 61 or the window 62 is opened.

[Embodiment 6]

Next, explanation will be given on an art for changing the resonance frequency as the sixth embodiment. With regard to the above-mentioned art, furry noise can be reduced against the frequency causing the largest sound pressure or vibration. However, the resonance frequency can be changed only to the predetermined frequency In this embodiment, length of a resonance pipe 31 or a part of a wall surface of a resonance box 30 is made to be variable so as to change the resonance frequency.

The resonance frequency of the resonator is influenced by the air in the cabin so as to be changed slightly from that at the opening state. Accordingly, a mechanism adjusting the resonance frequency of the resonator is required.

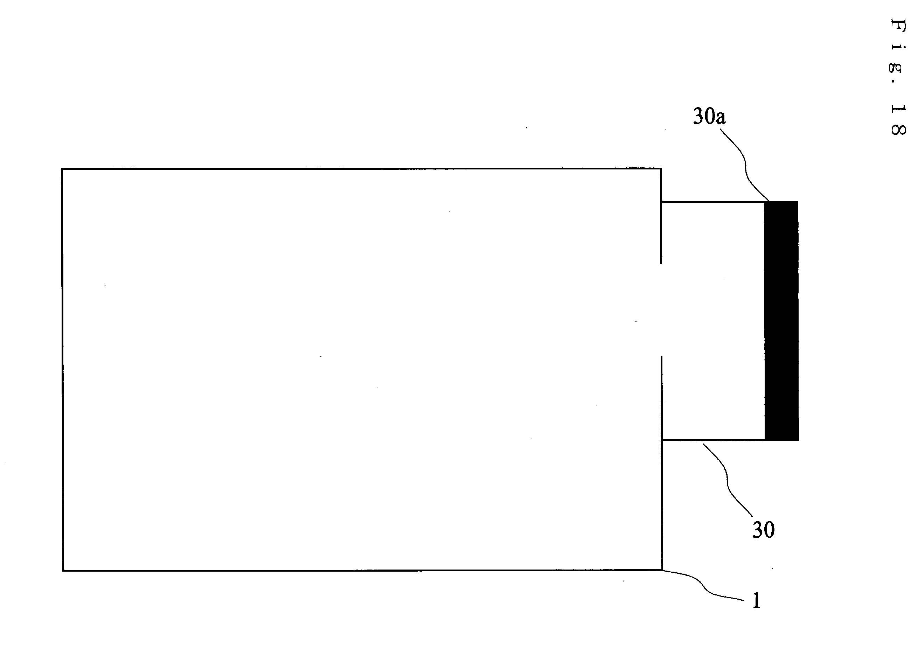

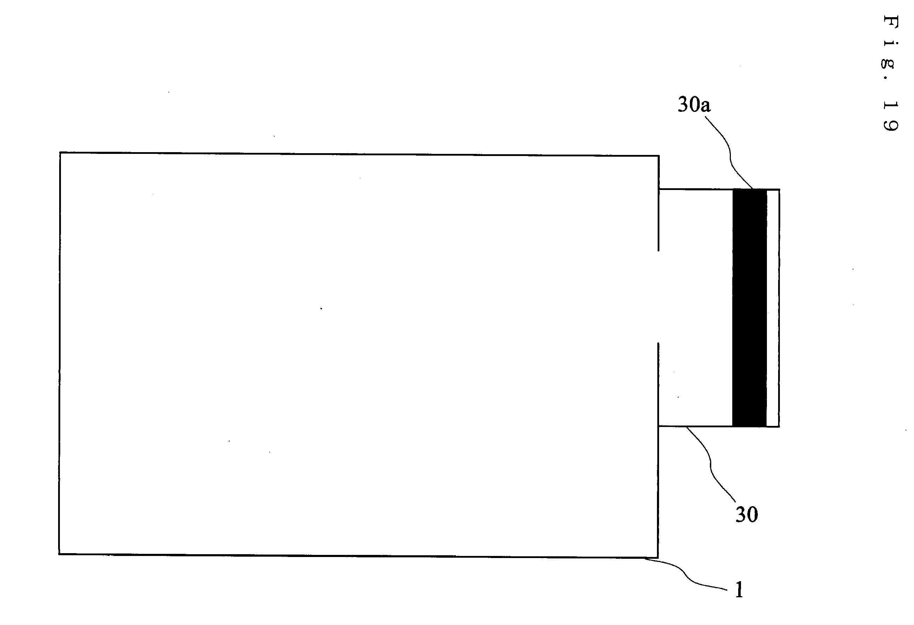

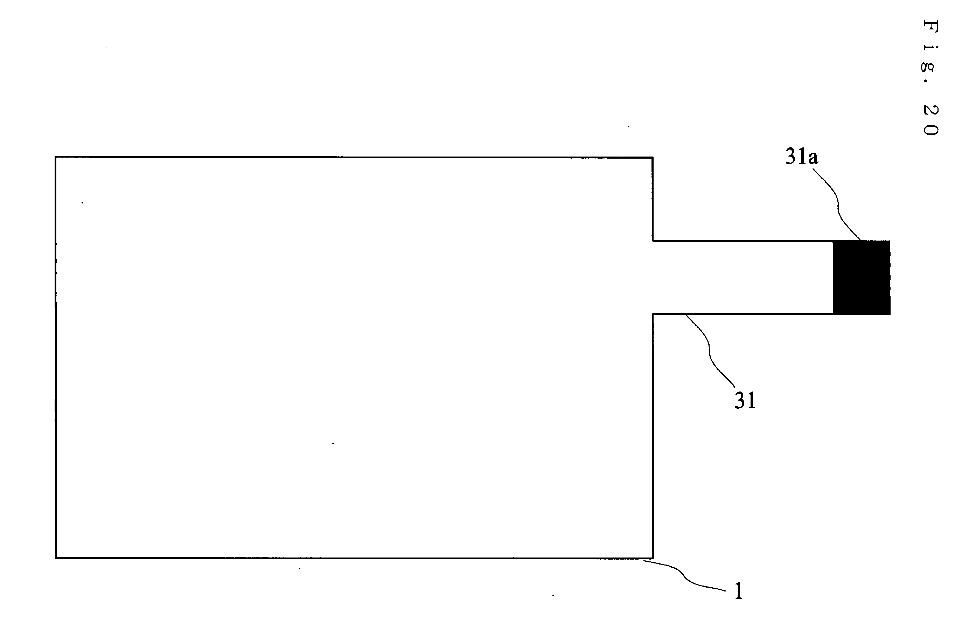

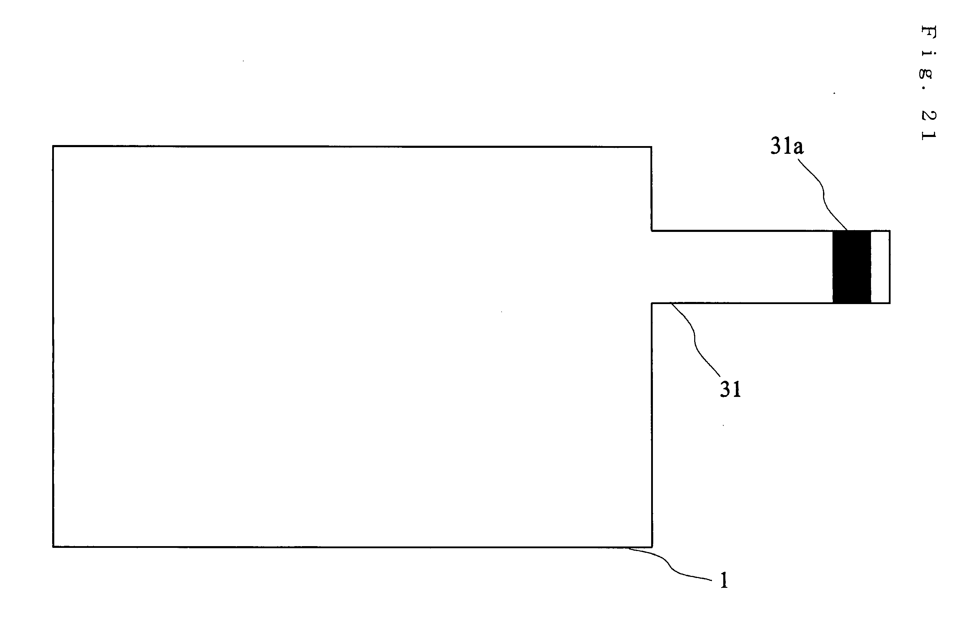

Concretely, as shown in Figs. 18 and 19, one wall surface 30a of the resonance box 30 is made to be variable so as to move on toward or go away from the cabin 1, whereby the dimensions influencing the resonance frequency is changed so as to change the resonance frequency. Otherwise, as shown in Figs. 20 and 21, a bottom surface 31 a of the resonance pipe 31 (the bottom surface 31a farthest from the wall surface of the cabin 1 and parallel to the wall surface of the cabin 1) is made to be variable so as to move on toward or go away from the cabin 1, thereby changing the resonance frequency.

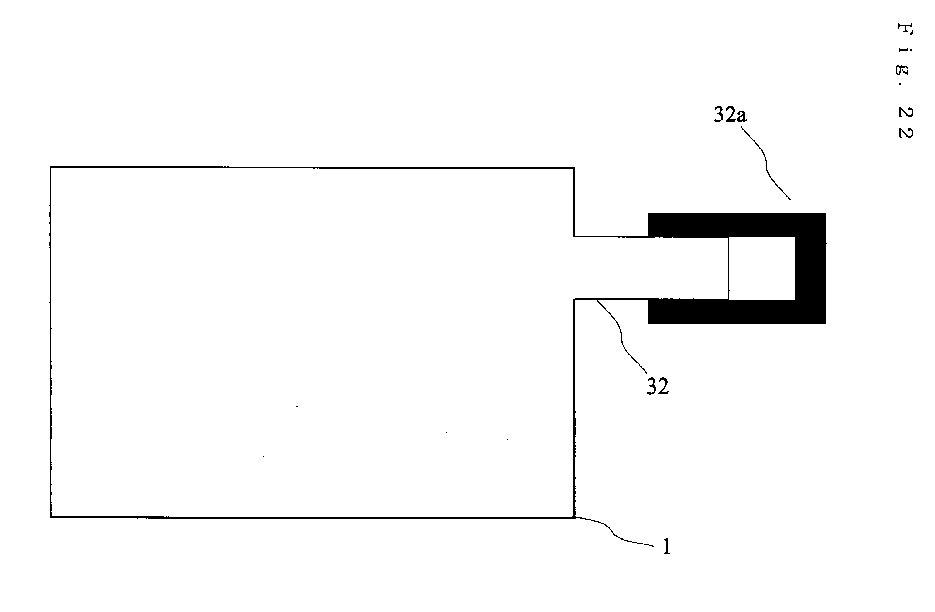

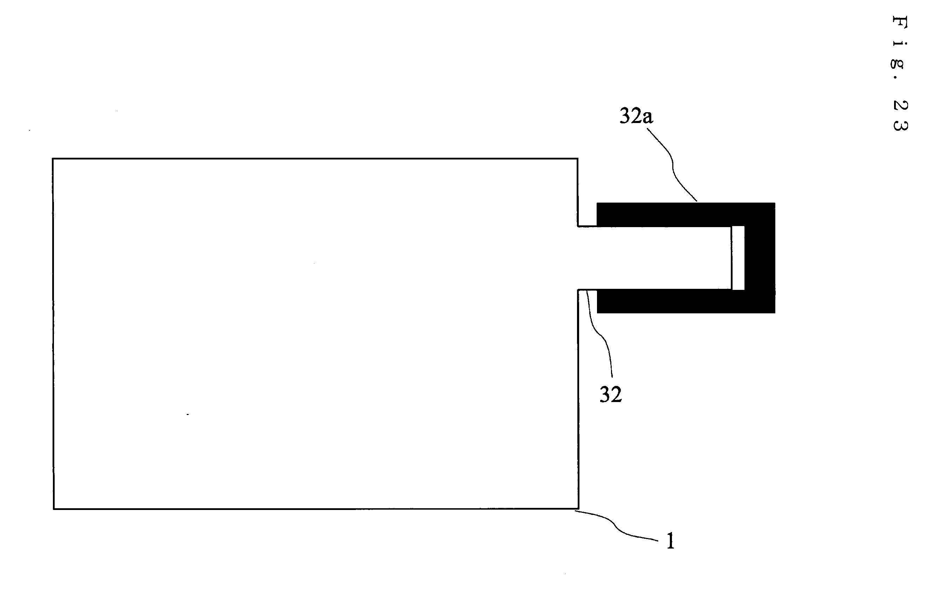

In this embodiment, the wall surface 30a or the bottom surface 31a is disposed slidably in the resonance box 30 or the resonance pipe 31. However, as shown in Figs. 22 and 23, it may alternatively be constructed so that a circular or polygonal slide barrel 32a that one of ends thereof is opened is engaged with the outside of a resonance pipe 32 so as to cover the resonance pipe 32.

In this embodiment, similarly to the fifth embodiment, the vibration, sound pressure or frequency is measured by the sensor 51 at the representative point in the cabin 1 or in the vicinity of the resonator 30, 31 or 32 so as to find the frequency in the cabin 1. The wall surface 30a, the bottom surface 31a or the slide barrel 32a is made to be movable by the actuator 46 and the actuator 46 is connected to the sensor 51 through the controller 45, whereby the resonance frequency is changed.

The sensors 44 and 51 measuring rotary speed of the engine of the working machine or the like having the cabin, sound pressure in the vicinity of the opening, or vibration at a prescribed position in the cabin, the actuator 46 adjusting the bottom surface 31a of the resonance pipe 31 or the slide barrel 32a of the resonance box 32, and the controller 45 controlling the actuator 46 moving the bottom surface 31a, the slide barrel 32a or wall surface 30a corresponding to the rotary speed, the sound pressure or the vibration measured by the sensors 44 and 51 are provided.

By changing fundamental frequency of the resonance pipes 31 and 32 or the resonance box 30, the amount of movement of the frequency is changed. Namely, by using the resonance pipes 31 and 32 or the resonance box 30 having slightly lower frequency than the hollow resonance frequency, the frequency is moved to the lower side widely. In the opposite case, the frequency is moved to the higher side. Accordingly, the matching corresponding to the vibration generator frequency can be performed.

[Embodiment 7]

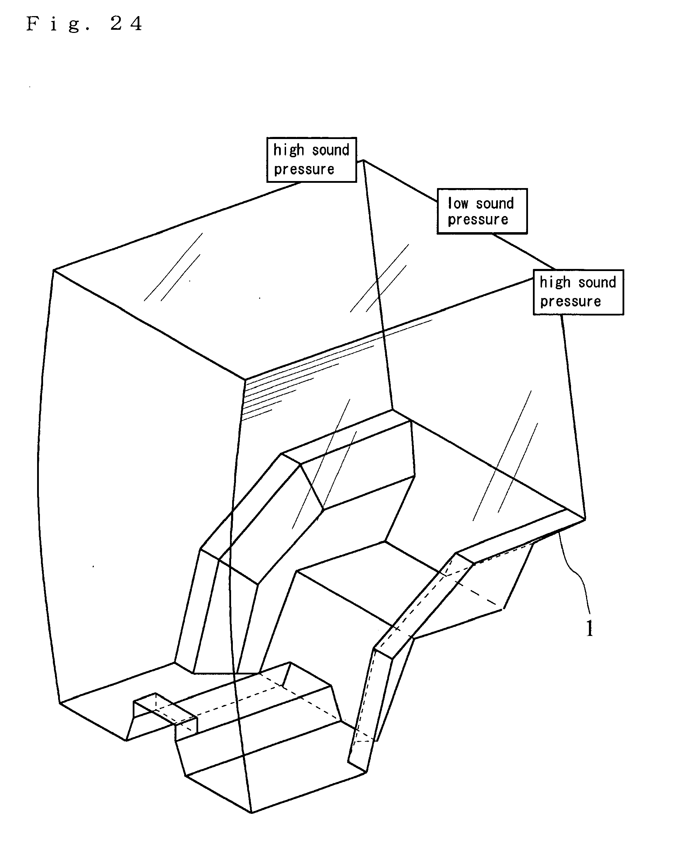

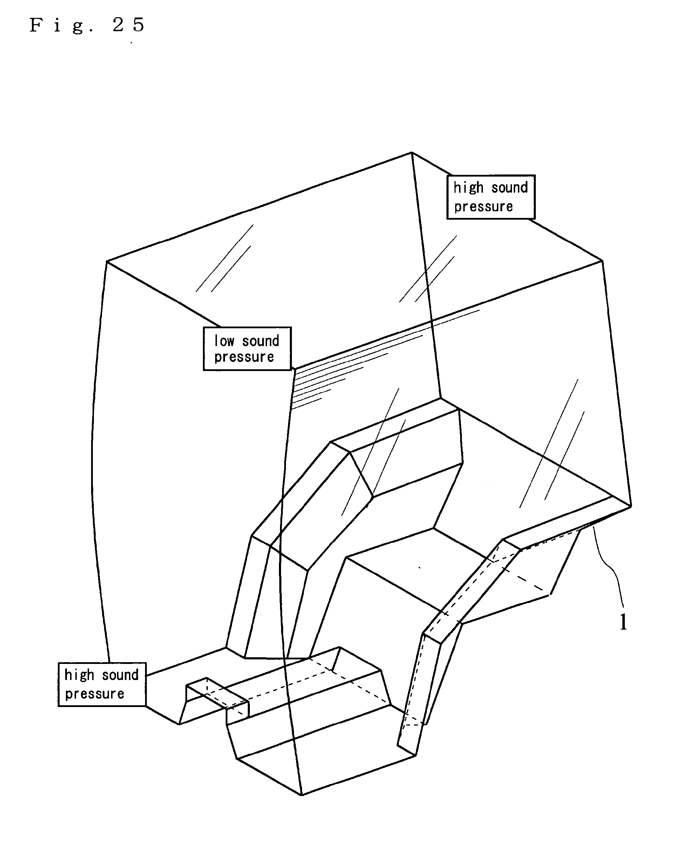

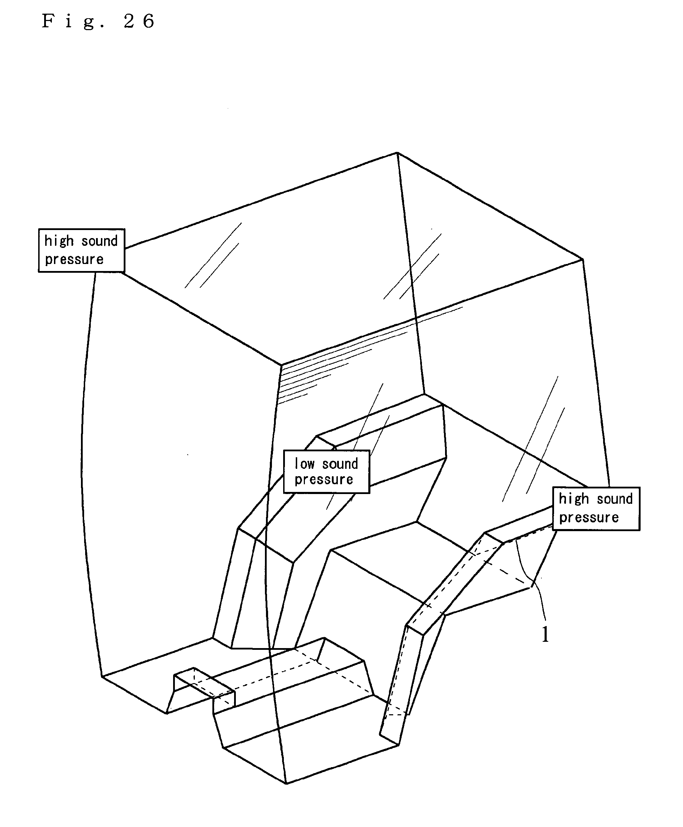

Next, explanation will be given on the installation point of the resonance box or the resonance pipe.
When the engine is actuated, furry noise is generated in the cabin 1. As mentioned above, with regard to the furry noise, the sound pressure and vibration is large in the vicinity of the wall surface. For example, as shown in Fig. 24, the sound pressure may be high at left and right ends of the cabin 1 and low in the vicinity of the lateral center (pattern 1). As shown in Fig. 25, the sound pressure may be high in the lower front portion and the upper rear portion of the cabin 1 and low in the vicinity of the longitudinal and vertical center (pattern 2). If all of the properties are applicable, as shown in Fig. 26, the sound pressure may be high at the right end the upper front portion and the left end of the lower rear portion of the cabin 1 and low in the vicinity of the longitudinal, vertical and lateral center (pattern 3).

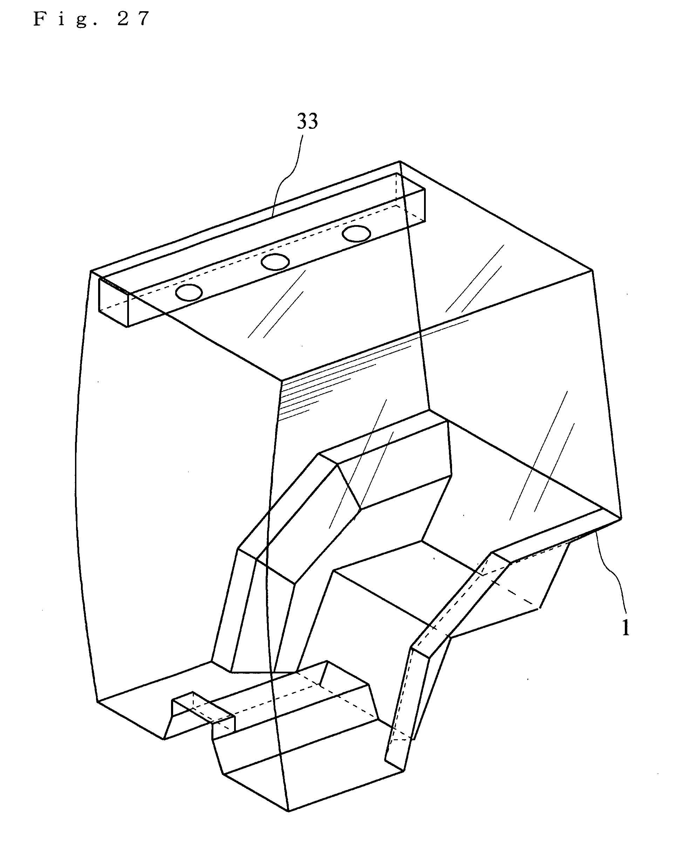

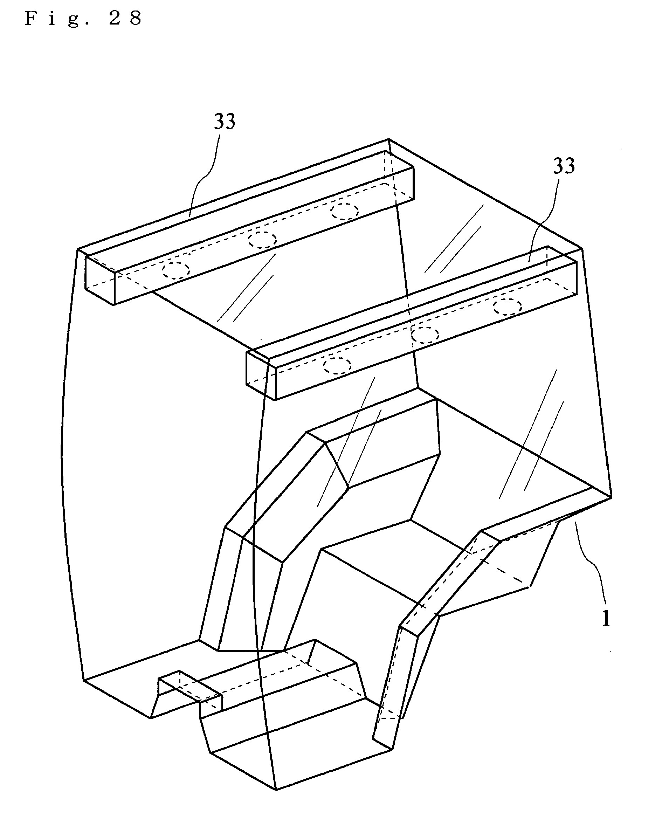

Then, as the seventh embodiment, as shown in Fig. 27, a Helmholtz type resonator 33 is fixed in the vicinity of the right end (edge) of the roof of the cabin 1. The resonator 33 fixed to the edge of the cabin 1 accordingly is not obstructive to an operator in the cabin 1. Herein, the resonator 33 may be fixed to the left end of the roof of the cabin 1. Alternatively, as shown in Fig. 28, two Helmholtz type resonators 33 may be fixed to the left and right ends, the opposite angles or the opposite sides of the roof of the cabin 1. This arrangement is especially effective to the above-mentioned pattern 1.

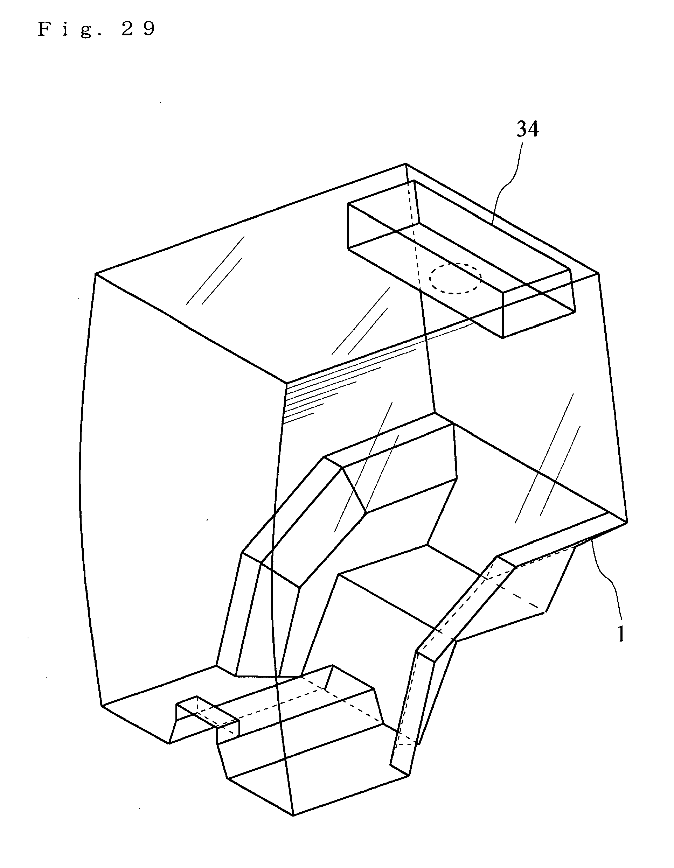

As shown in Fig. 29, a Helmholtz type resonator 34 may be fixed to the rear portion of the roof. As shown in Fig. 29, a side branch type resonator 35 may be fixed in the vicinity of the lateral center of the roof. An opening is provided at the rear end of the side branch type resonator 35. These methods fixing the resonators 34 and 35 to the upper rear portion are especially effective to the above-mentioned pattern 2. In addition, in the case of the pattern 3, it is effective to fix the resonator 34 to the upper front portion of the cabin 1.

The resonance pipes or the resonance boxes 33, 34 and 35 is provided at a vertex, a corner or an edge of the cabin 1.

Accordingly, the resonance pipes or the resonance boxes 33, 34 and 35 can be disposed without obstructing the living space. It is especially effective for the resonance of low frequency, and is effective to reduce noise resultingly.

[Embodiment 8]

Next, explanation will be given on an art for reducing two or more resonance frequencies as the eighth embodiment.
In the case that furry noise is generated in the cabin 1, when two resonance frequencies A and B (two peaks A and B) causing large vibration and sound pressure exist, resonators 36A and 37B respectively having resonance frequencies A and B are fixed in the cabin 1. Herein, the two resonance frequencies causing large vibration and sound pressure are not necessary to cause remarkably large vibration and sound than the other resonance frequencies. As the two resonance frequencies, resonance frequencies causing comparative large vibration and sound pressure may be chosen from various resonance frequencies of furry noise in the cabin 1.

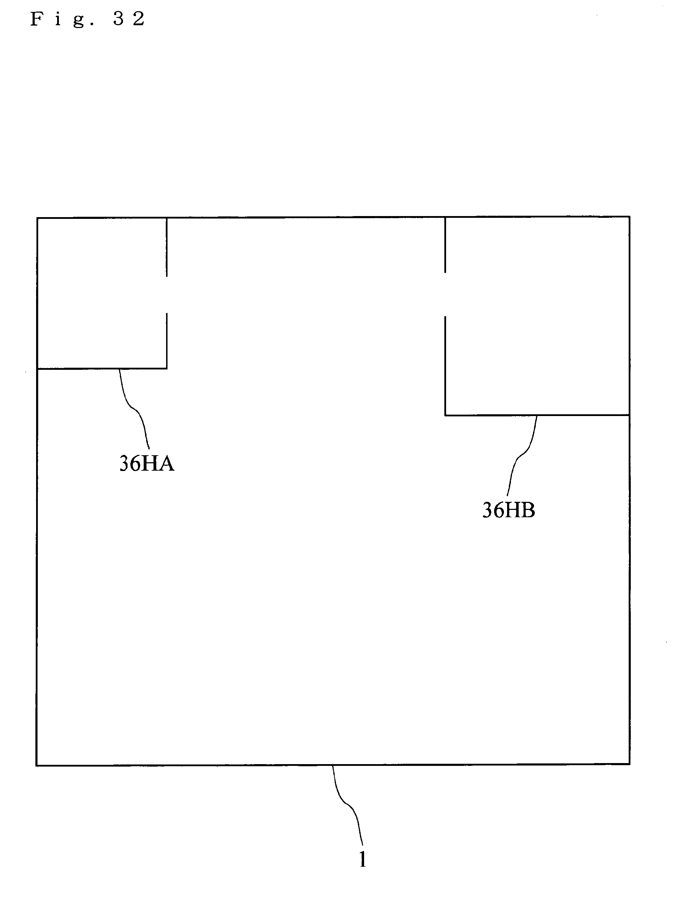

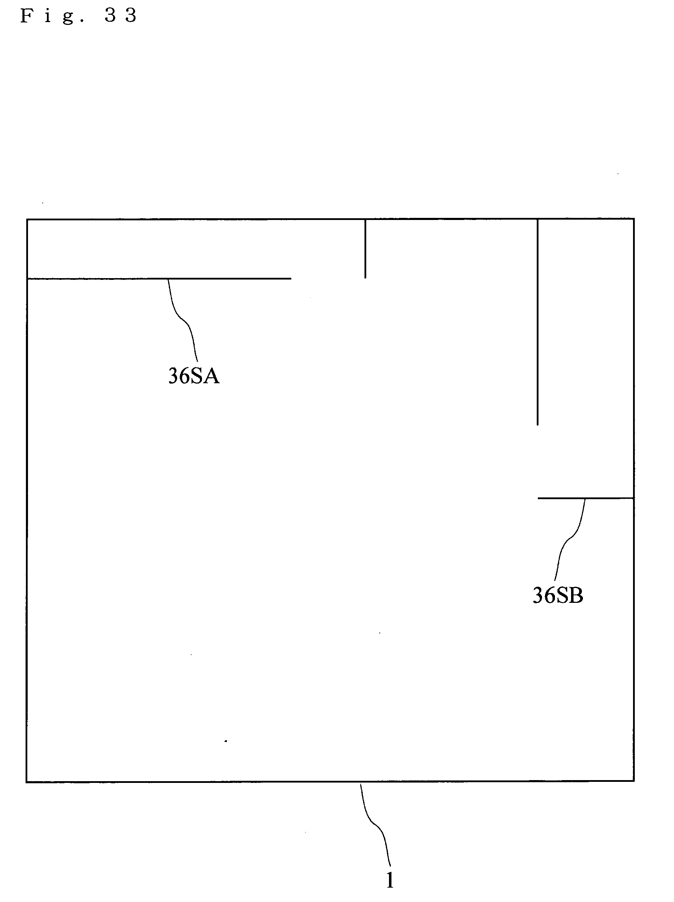

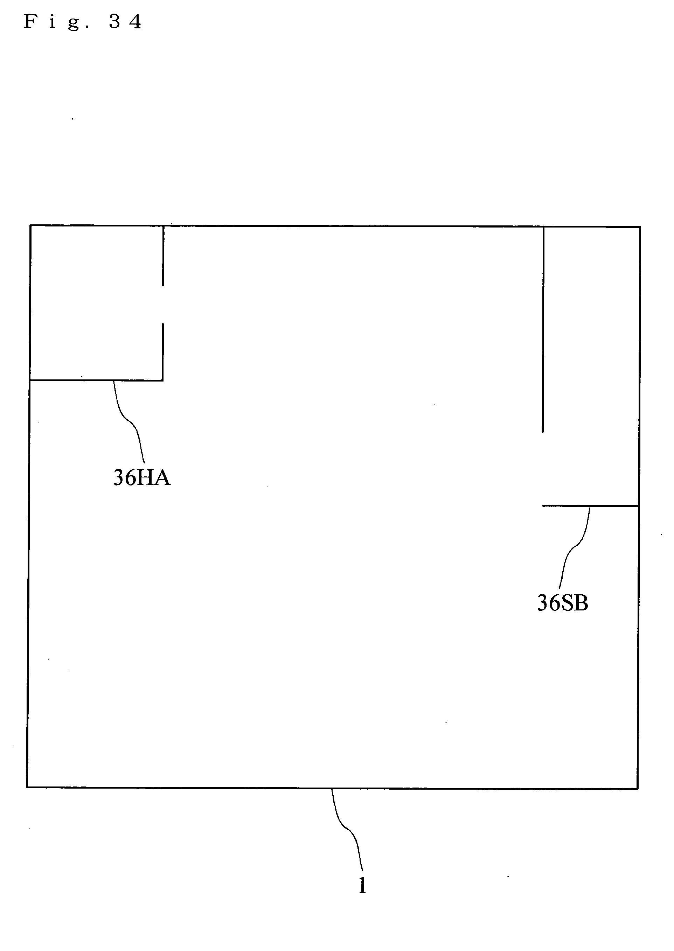

The positions of the resonators 36A and 36B are the antinodes of the respective resonance frequencies, that is, the positions at which the vibration and sound pressure are large under the respective resonance frequencies. As the two resonators 36A and 36B in this case, a Helmholtz type resonator 36HA and a Helmholtz type resonator 36HB shown in Fig. 32, a side branch type resonator 36SA and a side branch type resonator 36SB shown in Fig. 33, or the Helmholtz type resonator 36HA and the side branch type resonator 36SB shown in Fig. 34 may be adopted. The number of the resonators is not limited to two, and three or more resonators may be fixed so as to reduce the vibration and sound pressure of three or more resonance frequencies.

Each of at least two positions in the cabin 1 having high sound pressure and frequency different with each other is disposed thereat with the resonance pipes or the resonance boxes 36 having the same resonance frequency. Accordingly, with regard to two or more frequencies, it is especially effective for the resonance of low frequency similarly as mentioned above, and is effective to reduce noise resultingly.

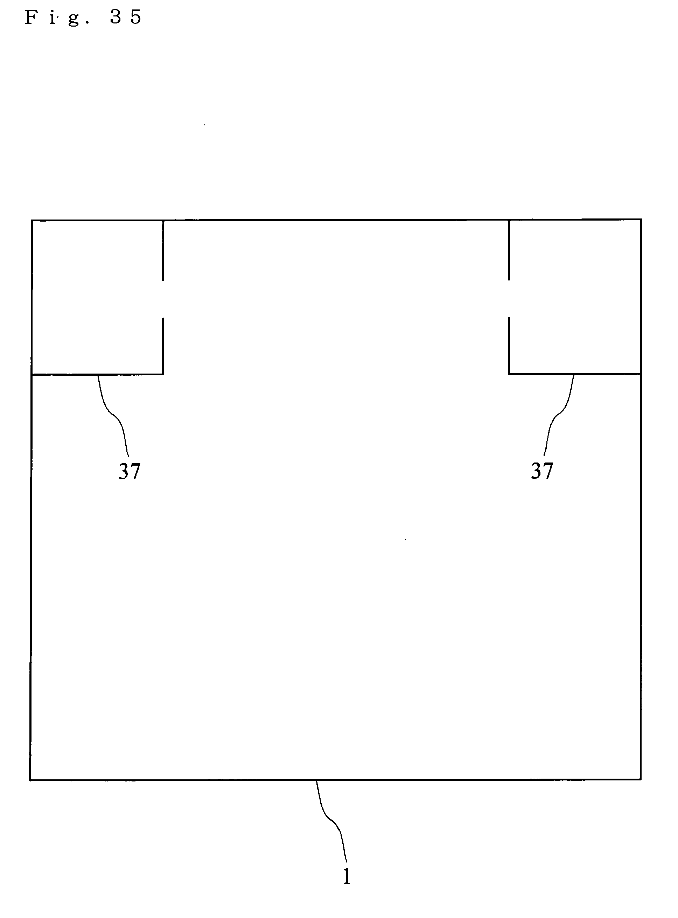

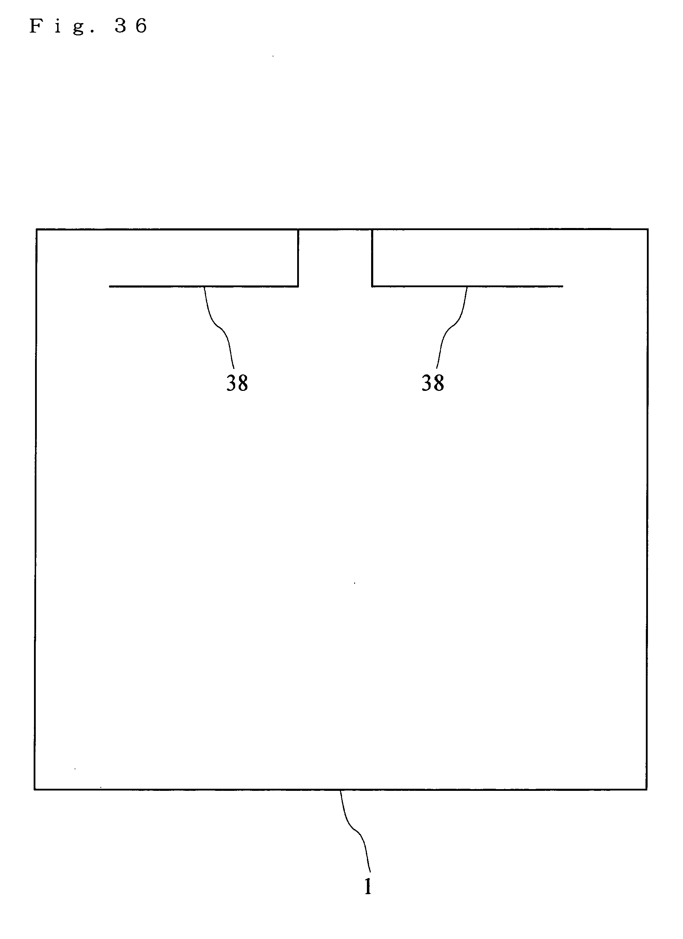

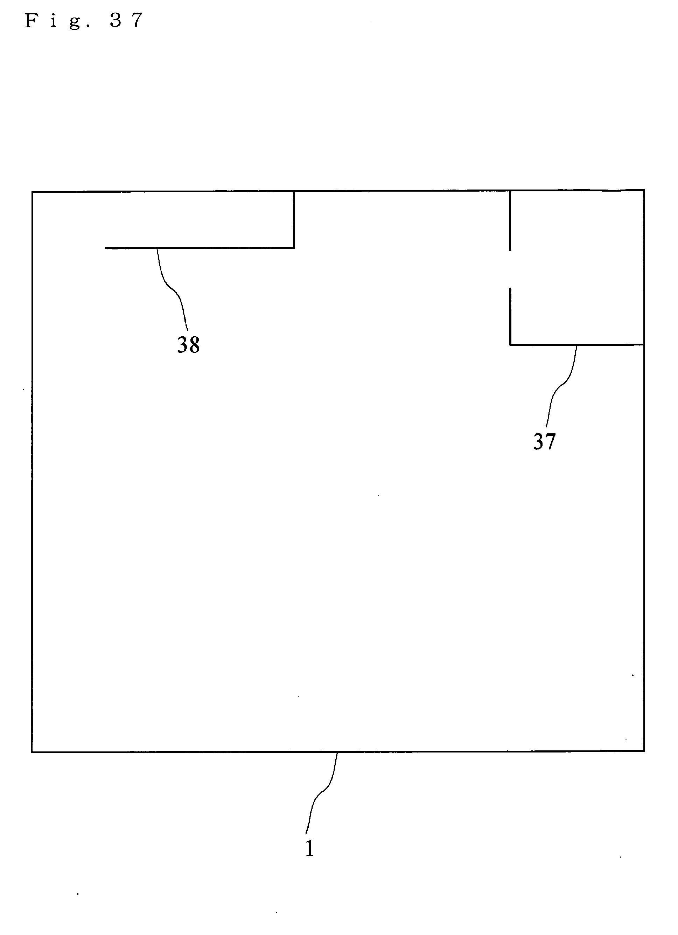

Two or more resonators 37 and 38 may be disposed so as to reduce the vibration and sound pressure of one resonance frequency. Concretely, as shown in Fig. 35, two Helmholtz type resonators 37 which are the same type may be fixed. As shown in Fig. 36, two side branch type resonators 38 which are the same type may alternatively be fixed. As shown in Fig. 37, one Helmholtz type resonator 37 and one side branch type resonator 38 may alternatively be fixed. The number of the resonators 37 and 38 is not limited to two, and three or more resonators may be fixed so as to enhance the effect.

Each of at least two positions in the cabin 1 having high sound pressure and the same frequency mutually is disposed thereat with the resonance pipes or the resonance boxes 37 and 38 having the same resonance frequency. Accordingly, the amount of movement of the frequency is increased so as to enhance the improvement effect. In this case, a lot of small resonance pipes or resonance boxes can be fixed to the end of the cabin, whereby furry noise can be reduced without obstructing the living space of an operator.

Instead of disposing a resonance pipe or a resonance box expressly, the roof having a certain amount of thickness and not necessary to be strong may be used as a resonator. Namely, the roof is constructed to be hollow, and a hole is opened from the inside of the cabin 1 to the roof. By opening the hole, the roof functions as a side branch type resonator or a Helmholtz type resonator. Instead of the roof, a hollow frame or a duct of an air conditioner may be used.

The opening is provided at the part of the cabin 1 and the opening is used as a resonance part. Accordingly, the resonance pipe or the resonance box can be disposed without obstructing the living space. It is not necessary to provide any resonance pipe or resonance box separately, whereby the cost is reduced.

[Embodiment 9]

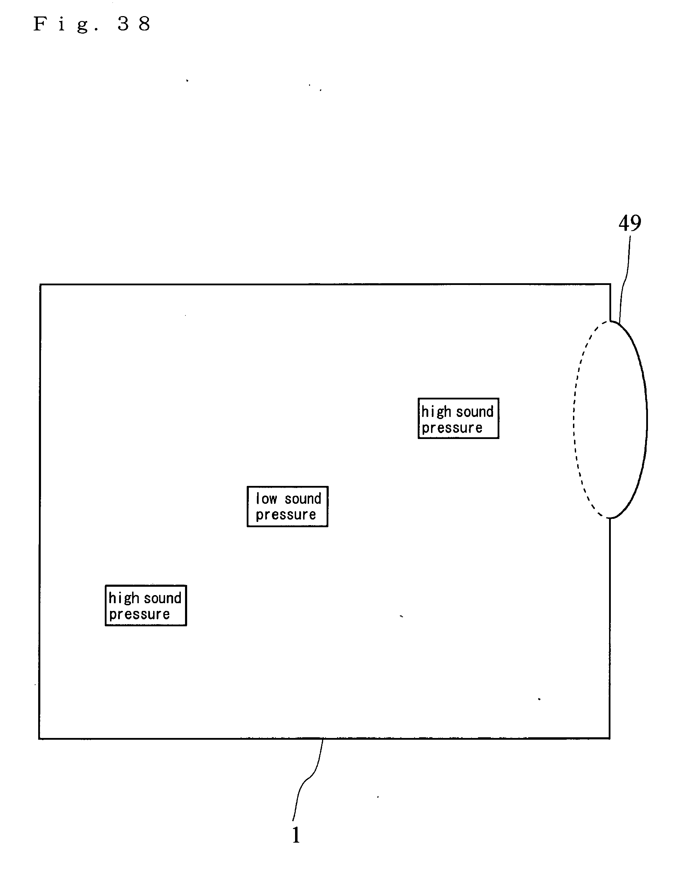

Next, explanation will be given on a method for moving hollow resonance frequency by resonance of a structure system as the ninth embodiment.
As shown in Fig. 38, a dynamic vibration reducer 49 comprising a thin film or the like is disposed in the vicinity of the antinode of the sound pressure. A thin elastic member such as rubber is suitable for the dynamic vibration reducer 49. The resonance frequency furry noise generated in the cabin 1 is found previously, and the dynamic vibration reducer 49 resonating at the resonance frequency is disposed to the point at which the vibration and sound pressure generated by the resonance frequency in the cabin 1 are large.

The dynamic vibration reducer 49 such as a thin film is disposed at the part in the cabin 1 at which sound pressure is high.
Accordingly, the structure system resonates as a dynamic vibration reducer so as to move the hollow resonance frequency.

[Embodiment 10]

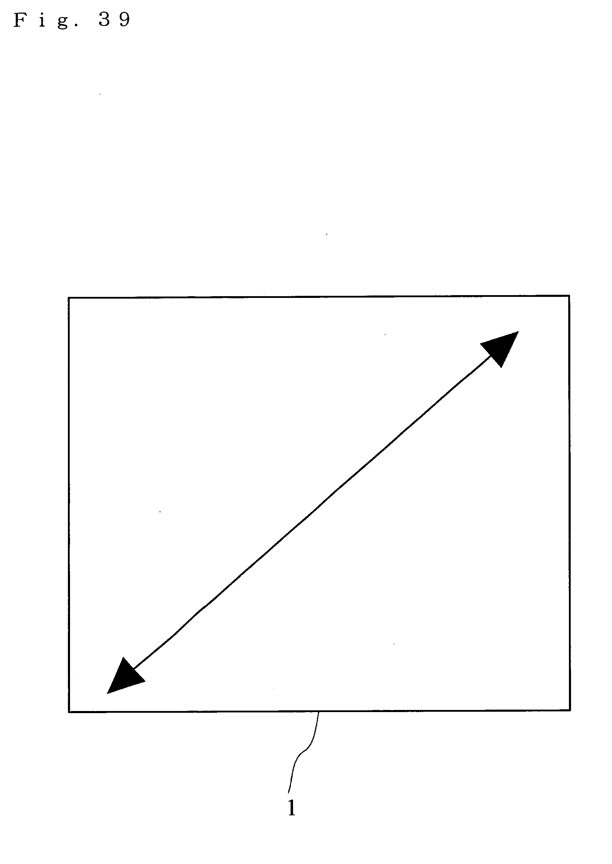

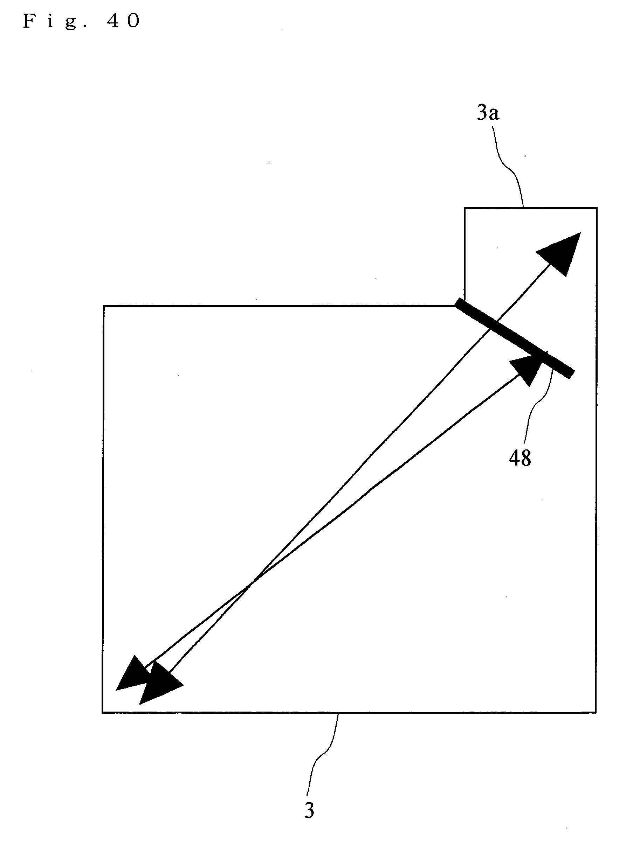

Next, explanation will be given on an art that a part of the cabin is transformed so as to obtain the same effect as disposing a resonance pipe or a resonance box as the tenth embodiment.
For example, in the case that the cabin 1 is shaped as shown in Fig. 39, when the sound pressure of furry noise caused by the vibration of the engine is large in the lower front portion and upper rear portion of the cabin 1 and low on the vicinity of the longitudinal and vertical center, the vibration and sound pressure of the resonance frequency concerning the dimension along an arrow in Fig. 39 have large influence. In this case, as shown in Fig. 40, the upper rear portion of the cabin 3 is dented slightly (convexed outward) so as to enlarge the dimension along the arrow. Accordingly, the resonance frequency is moved so as to reduce furry noise.

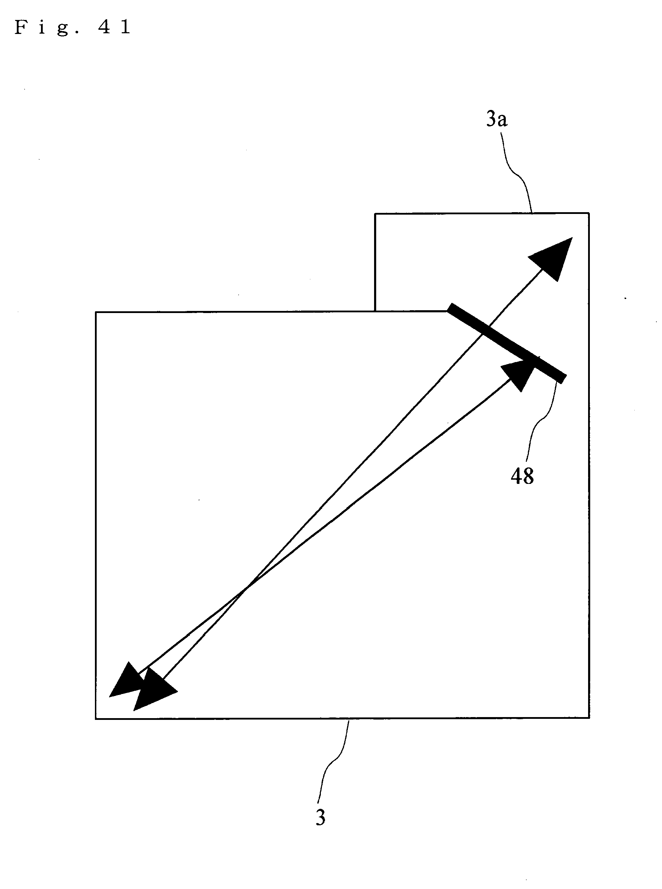

As shown in Fig. 40, a partition 48 is disposed rotatably below a recess 3a in the upper rear portion of the cabin 3 so as to adjust the dimension along the arrow, thereby following the change of the resonance frequency caused by the change of the rotary speed of the engine. Though the upper rear portion of the cabin 3 is recessed, the lower front portion thereof may be recessed.
As shown in Fig. 41, the opening of the recess may be labyrinthine shaped.

The hollow (recess) 3a is provided at the end of the part of the cabin 3 whose dimensions are based on hollow resonance and the partition 48 is provided at the opening of the hollow 3a so that a sound field is changed by opening and closing the partition 48.

Accordingly, the sound field can be changed without providing any resonance pipe or resonance box separately, whereby the design is simplified.

[Embodiment 11]

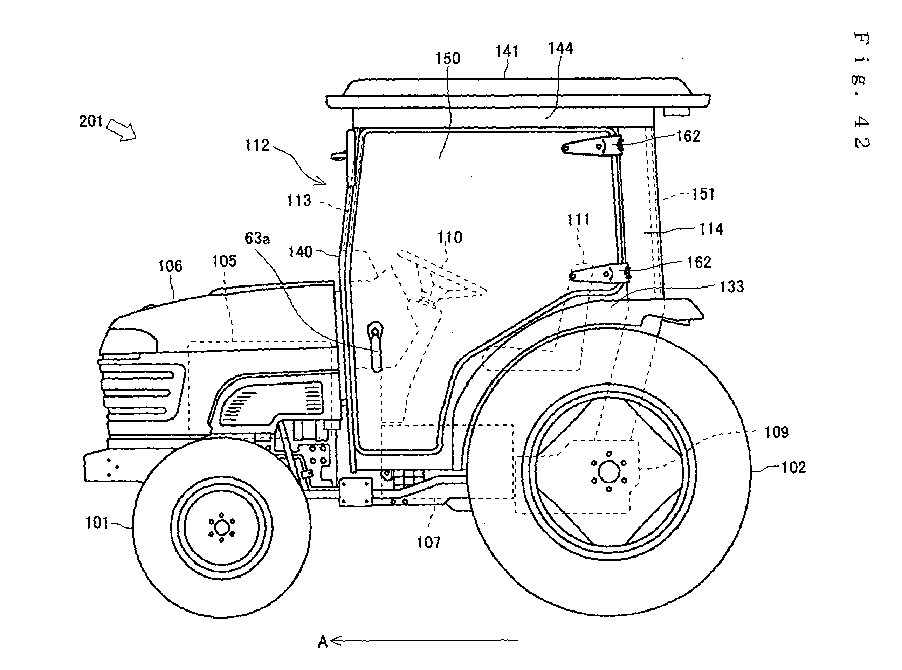

Hereinafter, explanation will be given on entire construction of a tractor 201 as an embodiment of a working vehicle having the noise proof structure of the present invention according to Fig. 42.

In addition, as mentioned above, the noise proof structure according to the present invention can be adopted widely to a cabin of an agricultural working machine such as a tractor or a combine or a construction machine such as a pickup truck or a dump truck, or to a room adjacent to a vibration source such as a trunk or a workroom to which an engine or another vibration source is provided.

In below explanation, a direction of an arrow A in Fig. 42 is regarded as the forward direction of the tractor 201, and the foreground of Fig. 42 is regarded as the left side of the tractor 201.

Front wheels 101 and rear wheels 102 are supported in the front and rear portions of the tractor 201. An engine 105 is disposed in a bonnet 106 in the front portion. A cabin 112 is provided behind the bonnet 106. A steering wheel 110 is disposed in the cabin 112, and a seat 111 is disposed therebehind. Operation levers such as a main speed change lever, a sub speed change lever and a PTO operation lever are disposed in the side of the seat 111.

Herein, the members operated by an operator so as to operate a working machine (in this embodiment, the tractor 201), that is, the steering wheel 110, the operation levers and the like are generically referred to as "operation part".

A clutch housing 107 is disposed behind the engine 105 and a transmission casing 109 is disposed behind the clutch housing 107 so that driving force from the engine 105 is transmitted to front wheels 101 and rear wheels 102, whereby the wheels are driven.

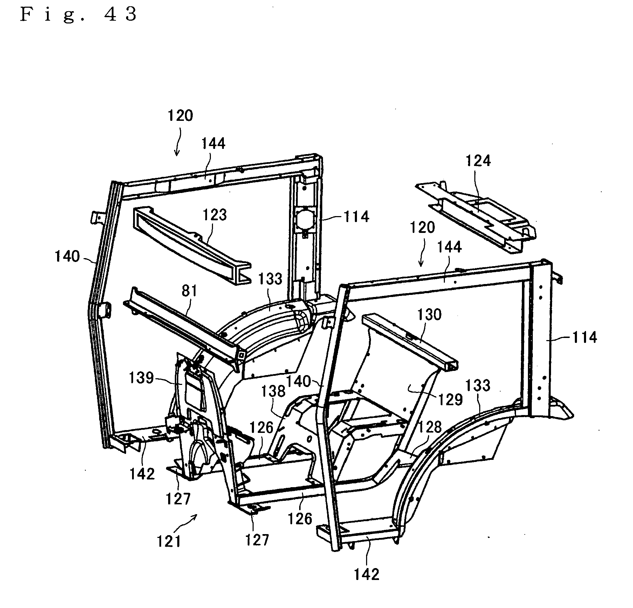

Hereinafter, explanation will be given on detailed construction of the cabin 112 as an embodiment of the noise proof structure of the present invention according to Figs. 42 and 43.

As shown in Figs. 42 and 43, the cabin 112 covers the circumference of the seat 111 of the tractor 201 (more strictly, the operation part of the working machine) so as to protect an operator from wind, rain, direct sunlight and the like. The cabin 112 comprises a frame manly constructed by a pair of left and right side frame units 120, a lower frame unit 121, a front upper frame 123, a rear upper frame 124, a front center frame 81 and the like, a front windshield 113, by a pair of left and right doors 150, a rear windshield 151, a roof 141 provided at the upper surface of the cabin 112, and the like.

As shown in Fig. 43, the left and right side frame units 120 are structures constituting the side surfaces of the cabin 112. In addition, since the left and right side frame units 120 in this embodiment are constructed substantially symmetrically laterally, only the side frame unit 120 at the left side of the cabin 112 is described below.

The side frame unit 120 manly comprises a front pillar 140, a rear pillar 114, a side upper frame 144, a side step frame 142, and a fender 133.

The front pillar 140 constitutes the front portion of the side frame units 120 and support the left or right front end of the roof 141 of the cabin 112. The front pillar 140 is pipe-like member, and is bent at the middle thereof to be doglegged when viewed in side.

The rear pillar 114 constitutes the rear portion of the side frame unit 120 and support the left or right rear end of the roof 141 of the cabin 112.

The side upper frame 144 constitutes the upper portion of the side frame unit 120. The front end of the side upper frame 144 is fixed to the upper end of the front pillar 140, and the rear end thereof is fixed to the upper end of the rear pillar 114.

The side step frame 142 constitutes the lower front portion of the side frame unit 120. The front end of the side step frame 142 is fixed to the lower end of the front pillar 140, and the rear end thereof is fixed to the front end of the fender 133. The side step frame 142 functions as a step on which an operator treads at the time of getting on and off the vehicle.

The fender 133 constitutes the lower rear portion of the side frame unit 120. One of the ends of the fender 133 is fixed to the rear end of the side step frame 142, and the rear end thereof is fixed to the lower end of the rear pillar 114. The fender 133 faces to the rear wheel 102 so as to prevent mud splashed up by the rear wheel 102 from entering the cabin 112.

The lower frame unit 121 is a structure body constituting the lower surface of the cabin 112. The lower frame unit 121 mainly comprises a pair of left and right down frames 126, a rear center frame 130, a dust cover 129, a seat fixing member 138, an air cut plate 139, front mount stays 127 and rear mount stays 128.

Each of the down frames 126 is bent at the middle thereof to be doglegged when viewed in side and constitutes the lower portion and rear portion of the lower frame unit 121. The front ends of the down frames 126 are respectively fixed to the left and right lower ends of the air cut plate 139, and the rear ends thereof are respectively fixed to the left and right ends of the rear center frame 130.

The rear center frame 130 constitutes the rear portion of the lower frame unit 121 and is fixed to the rear ends of the down frames 126.

The dust cover 129 constitutes the rear surface of the lower frame unit 121 and is fixed to the rear portions of the down frames 126 and the rear center frame 130 so as to improve the rigidity of the lower frame unit 121 and closes the lower portion of the rear surface of the cabin 112 so as to prevent mud from entering the cabin 112.

The seat fixing member 138 is arranged above the down frames 126 and before the rear center frame 130. The seat 111 and the operation levers are disposed on the upper surface of the seat fixing member 138.

The air cut plate 139 constitutes the front surface of the lower frame unit 121. The lower end of the air cut plate 139 is fixed to the front ends of the down frames 126. The air cut plate 139 prevents noise and outer air from entering the cabin 112 from the bonnet 6 and concurrently serves as an attachment member to which the steering wheel 110 and the other meters, operation pedals and the like are attached.

The front mount stays 127 are fixed to the front ends of the down frames 126. The front mount stays 127 fix the front portion of the lower frame unit 121 to the front portions of the side frame units 120 (the side step frames 142) and concurrently fix the cabin 112 through a vibration-proof member to the main body of the tractor 201.

The rear mount stays 128 are fixed to the bent portions of the down frames 126. The rear mount stays 128 fix the rear portion of the lower frame unit 121 to the rear portions of the side frame units 120 (the fenders 133) and concurrently fix the cabin 112 through a vibration-proof member to the main body of the tractor 201.

As shown in Fig. 42, with regard to the member constituting the frame of the cabin 112, the front windshield 113 is fixed to the front opening of the cabin 112 surrounded by the front upper frame 123, the front pillars 140 and the front center frame 81. The front windshield 113 is constructed by transparent material, such as glass or resin.

With regard to the member constituting the frame of the cabin 112, the rear windshield 151 is fixed to the rear opening of the cabin 112 surrounded by the rear upper frame 124, the rear pillars 114 and the rear center frame 130. The rear windshield 151 is constructed by transparent material, such as glass or resin.

In below explanation, with regard to the members constituting the frame of the cabin, the member covering the operation part is referred to as "covering member", and the member provided to be able to be opened and closed at the opening provided at the part of the covering member is referred to as "opening and closing member".
In this embodiment, the structure bodies of the cabin 112 and the members fixed thereto, such as the frames and the roof 141, are the covering members. The doors 150 are the opening and closing members.
With regard to the front windshield 113 and the rear windshield 151, if the windshield can be opened and closed, the windshield is the opening and closing member. If the windshield is fixed to the frame, the windshield is the covering member.

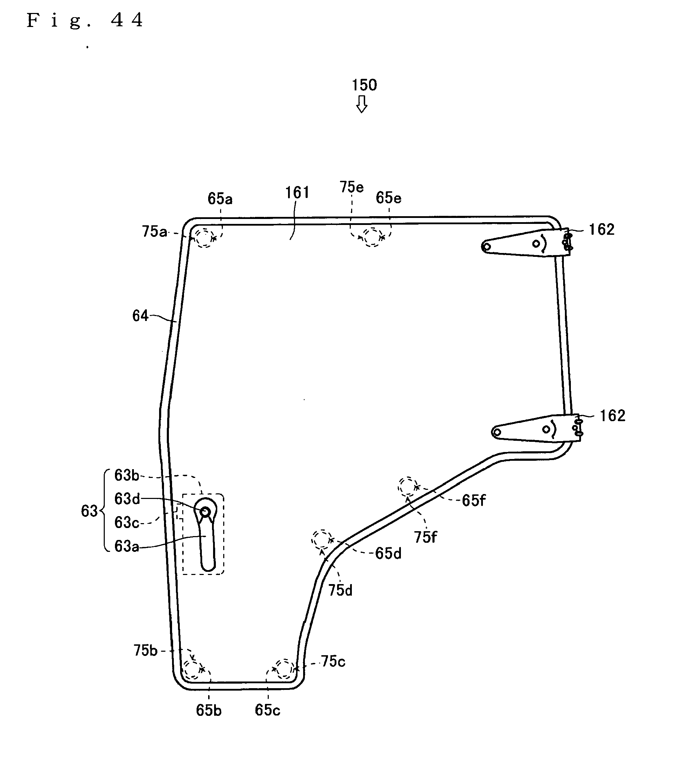

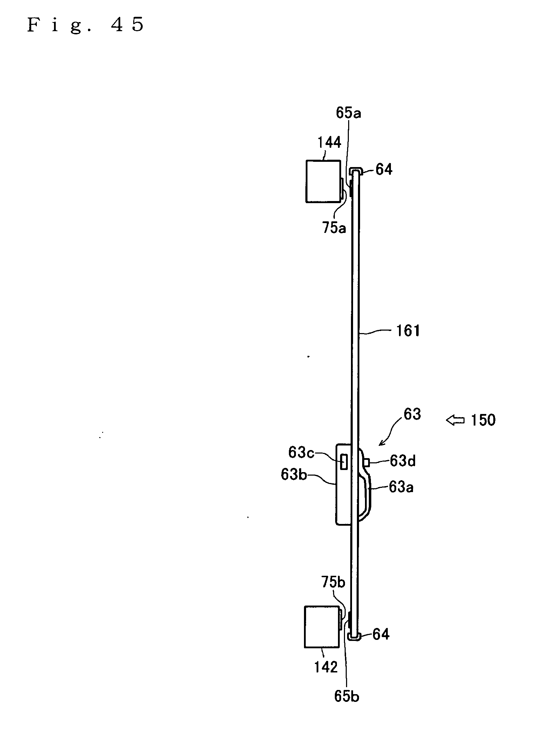

Hereinafter, explanation will be given on the detailed construction of the pair of left and right doors 150 as the first embodiment of the opening and closing member of the present invention according to Figs. 42, 44 and 45.
With regard to the member constituting the frame of the cabin 112, the doors 150 are provided the left and right side opening surrounded by the front pillars 140, the rear pillars 114, the side upper frame 144, the side step frames 142 and the fenders 133.
In addition, the doors 150 in this embodiment are constructed substantially symmetrically laterally, only the door 150 at the left side of the cabin 112 is described below.

The door 150 mainly comprises a body 161, hinges 162, a holding member 63 and a weather strip 64.

The body 161 is constructed by transparent material, such as glass or resin, so as to secure the field of view at the side of an operator in the cabin 112.

The hinges 162 attach the rear end of the door 150 rotatably to the frame of the cabin 112 (in this embodiment, the rear pillar 114).
In addition, though the hinges 162 attach the rear end of the door 150 to the frame of the cabin 112, the hinges 162 may attach the front or upper end of the door 150.

The holding member 63 is attached to the front end of the door 159, that is, the end of the door 150 opposite to the end to which the hinges 162 are attached (the rear end) and holds the closed door 150 with the frame of the cabin 112 (in this embodiment, the front pillar 140).
The holding member 63 comprises a doorknob 63a, a holding claw receiving part 63b, a holding claw 63c, a button 63d and the like.

The doorknob 63a is a grip grasped by an operator by hand so as to open the door 150, and is provided on the outer surface of the door 150 (the surface facing to the outside of the cabin 112).

The holding claw receiving part 63b and is provided on the inner surface of the door 150 (the surface facing to the inner space of the cabin 112). The holding claw receiving part 63b receives the holding claw 63c therein and has a mechanism (not shown) projecting the holding claw 63c from the holding claw receiving part 63b and putting the holding claw 63c into the holding claw receiving part 63b.

The holding claw 63c can be projected from the holding claw receiving part 63b. When the door 150 is closed, the holding claw 63c is engaged with an engaging member (not shown) provided at the side of the frame (in this embodiment, the front pillar 140) of the cabin 112 so as to hold the front end of the door 150 to the frame (in this embodiment, the front pillar 140) of the cabin 112.

The button 63d makes the holding claw 63c received (retracted) into the holding claw receiving part 63b, that is, releases the engagement between the holding claw 63c and the engaging member (not shown) provided at the side of the frame (in this embodiment, the front pillar 140) of the cabin 112 at the time of opening the door 150. The button 63d is provided at the suitable position to be operated by an operator by a hand grasping the doorknob 63a, at the outer side of the door 150.

The weather strip 64 is constructed by elastic material such as rubber or resin, and covers the peripheral edge of the door 150. When the door 150 is closed, the weather strip 64 touches the peripheral edge of the opening of the cabin 112 so as to prevent wind and rain from entering the cabin, and prevents the door 150 from colliding with the frame frequently so as to reduce the generation of uncomfortable vibration noise.

On the inner surface of the door 150 in this embodiment, six restrained members 65a, 65b, 65c, 65d, 65e and 65f are provided.

The restrained members 65a, 65b, 65c, 65d, 65e and 65f are constructed by material adsorbed by a magnet or magnetic force (for example, magnetic material comprising slug of iron or the like, or a permanent magnet) and each of them is provided at the peripheral edge of the door 150.

On the other hand, on the frame of the cabin 112, permanent magnets 75a, 75b, 75c, 75d, 75e and 75f are provided as restraining actuators respectively at the positions facing to the restrained members 65a, 65b, 65c, 65d, 65e and 65f. Each of the permanent magnets 75a, 75b, 75c, 75d, 75e and 75f is one of the modes of effectuation of a magnet and is constructed by a permanent magnet such as a ferrite magnet.

When the door 150 is closed, the permanent magnets 75a, 75b, 75c, 75d, 75e and 75f adsorb the restrained members 65a, 65b, 65c, 65d, 65e and 65f (that is, the restrained members 65a, 65b, 65c, 65d, 65e and 65f are restrained by the permanent magnets 75a, 75b, 75c, 75d, 75e and 75f).

In addition, the opening and closing member is not limited to the doors 150 of the present embodiment. The front windshield 113 and the rear windshield 151 constructed to be able to be opened and closed, a ventilating hatch (not shown) provided in the roof 141, and the like are included in the opening and closing member.

The cabin 112 forming the noise proof structure of the cabin according to the present invention comprises:

one of ends of the door 150 is attached through the hinge 162 to the rear pillar 114;
the other end of the door 150 is held to the front pillar 140 by the doorknob 63a;
one or more (in this embodiment, six) restrained members 65a, 65b, 65c, 65d, 65e and 65f is provided at the peripheral edge of the door 150;
each of the permanent magnets 75a, 75b, 75c, 75d, 75e and 75f is provided at the position facing to one of the restrained members 65a, 65b, 65c, 65d, 65e and 65f in the frame at the time of closing the door 150; and
the restrained members 65a, 65b, 65c, 65d, 65e and 65f are restrained by the permanent magnets 75a, 75b, 75c, 75d, 75e at the time of closing the door 150.

This construction has below merits.

With regard to the conventional cabin, when the door is closed, only the part to which the hinges are attached and the part at which the holding member is held are fixed to the covering member. Accordingly, when the vibration caused by the working machine traveling on a rough road or the vibration generated by the engine or the working machine is transmitted through the frame of the cabin to the door, the part of the door not fixed to the covering member is vibrated, whereby the capacity of the cabin is changed. Then, by the vibration of the part of the door not fixed to the covering member, air pressure in the cabin is changed so that furry noise is generated.

On the contrary, with regard to the cabin 112 according to the present invention, when the door 150 is closed, not only the part to which the hinges 162 are attached and the part at which the holding member 63 is held but also the parts at which the permanent magnets 75a, 75b, 75c, 75d, 75e and 75f restrict the restrained members 65a, 65b, 65c, 65d, 65e and 65f are fixed to the covering member of the cabin 112.

Accordingly, even if the vibration caused by the working machine traveling on a rough road or the vibration generated by the engine or the working machine is transmitted through the frame of the cabin to the door, the length of the part of the door 150 not fixed to the covering member (that is, the length between the parts fixed to the covering member at the peripheral edge of the door 150) is short, and the change amount of the capacity of the cabin 112 by the vibration of the door 150 is small (that is, the amplitude of the opening and closing member at the time of the vibration is small). Therefore, the generation of furry noise is reduced so as to improve the livability and comfortability for an operator in the cabin 112.

Since the part of the door 150 fixed to the covering member of the cabin 112 is increased, the adherence between the door 150 and the cabin 112 is improved compared with the conventional construction, whereby the noise of the outside is prevented from entering the cabin 112.

In addition, the number of the restrained members is not limited to six as this embodiment and is preferably selected corresponding to the shape, material and thickness of the opening and closing member suitably.

When the door is shaped substantially polygonal as shown in this embodiment, it is preferable to provide the restrained members at the vertexes of the door 150 (corresponding to the restrained members 65a, 65b, 65c and 65d) or the substantial centers of the sides of the door 150 (corresponding to the restrained members 65e and 65f). Accordingly, the number of the positions fixing the opening and closing member to the covering member of the cabin is minimized so as to reduce the change amount of the capacity of the cabin 112 efficiently (that is, to reduce the amplitude of the opening and closing member at the time of the vibration), whereby the generation of furry noise is reduced.

In addition, the peripheral edge of the opening and closing member at which the restrained members are provided is not limited to "at the side of the inner surface of the opening and closing member and in the vicinity of the end surface of the opening and closing member" and may be "on the end surface (upper, side or lower end surface) of the opening and closing member" or "at the side of the outer surface of the opening and closing member and in the vicinity of the end surface of the opening and closing member".

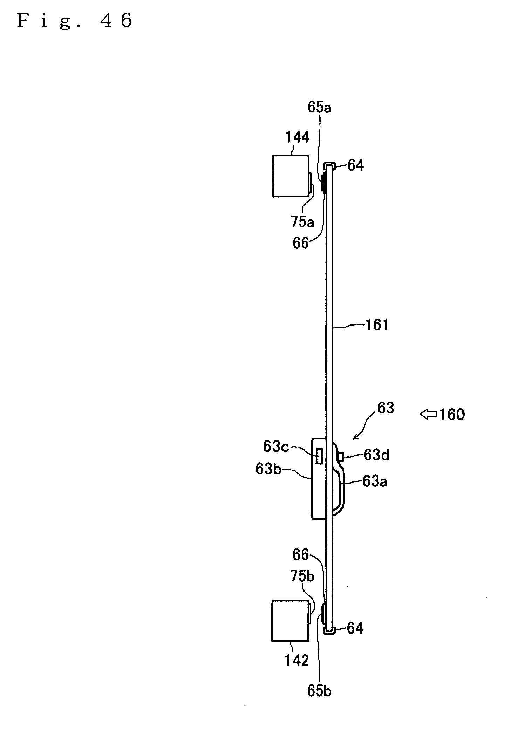

Hereinafter, explanation will be given on the detailed construction of a door 160 as the second embodiment of the opening and closing member of the present invention according to Fig. 46.
In addition, with regard to the members constituting the door 160, the members having the substantial same construction as the members of the door 150 are designated by the same numerals and explanation thereof is omitted. Only the point of difference from the door 150 will be described.

The point of difference of the door 160 from the door 150 is that elastic members 66 constructed by elastic material such as rubber or resin are interposed between the restrained members 65a, 65b, 65c, 65d, 65e and 65f (in Fig. 46, only the restrained members 65a and 65b are shown) and the body 161.
Accordingly, the vibration of the door 160 is reduced furthers as to prevent the generation of furry noise.

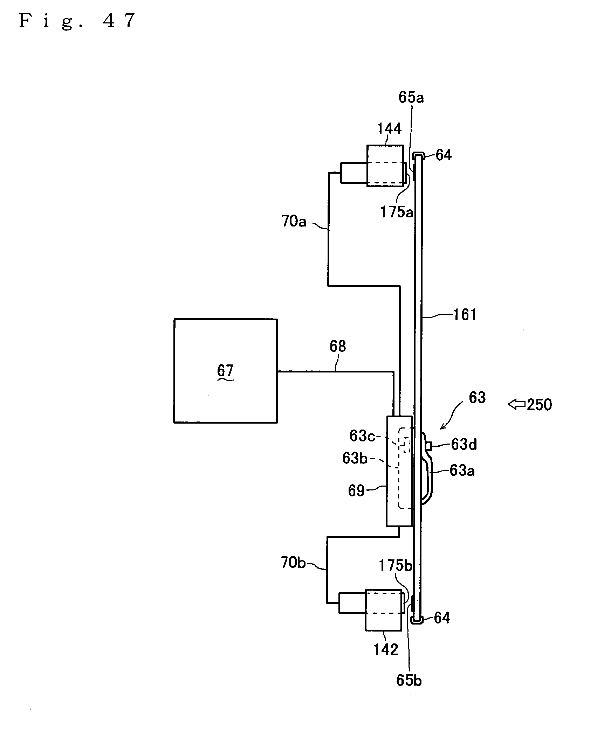

Hereinafter, explanation will be given on the detailed construction of a door 250 as the third embodiment of the opening and closing member of the present invention according to Fig. 47.
In addition, with regard to the members constituting the door 250, the members having the substantial same construction as the members of the door 150 are designated by the same numerals and explanation thereof is omitted. Only the point of difference from the door 150 will be described.

The point of difference of the door 250 from the door 150 is that electromagnets 175a, 175b, 175c, 175d, 175e and 175f (in Fig. 47, only the electromagnets 175a and 175b are shown) are used as restraining actuators restraining the restrained members 65a, 65b, 65c, 65d, 65e and 65f (in Fig. 47, only the restrained members 65a and 65b are shown), and electric power is supplied from a dynamo 67 to the electromagnets 175a, 175b, 175c, 175d, 175e and 175f through an electric wire 68, a switch mechanism 69 and electric wires 70a, 70b, 70c, 70d, 70e and 70f (in Fig. 47, only the electromagnets 70a and 70b are shown).
Herein, the dynamo 67 generates electric power interlockingly with the engine 105 of the tractor 201 (generates electric power only at the time that the engine 105 is rotatively driven).
In addition, instead of the dynamo 67, a storage battery may be used as a power source for the electromagnets.

This construction has below merits.
In the case that permanent magnets are used as restraining actuators restraining the restrained members 65a, 65b, 65c, 65d, 65e and 65f, when the distance between the restrained members 65a, 65b, 65c, 65d, 65e and 65f and the permanent magnets becomes short (that is, when the door is closed), magnetic force is always generated therebetween. Accordingly, the opening and closing of the door becomes heavy (that is, the power required for opening the door becomes large).
On the contrary, as the door 250, in the case that the electromagnets 175a, 175b, 175c, 175d, 175e and 175f are used as restraining actuators restraining the restrained members 65a, 65b, 65c, 65d, 65e and 65f, when the door 250 is closed, the supply of the electric power is stopped and magnetic force is not generated between the electromagnets 175a, 175b, 175c, 175d, 175e and 175f and the restrained members 65a, 65b, 65c, 65d, 65e and 65f so as to release the restraint. Only when the door 250 is fixed to the frame of the cabin 112, the electric power is supplied and magnetic force is generated between the electromagnets 175a, 175b, 175c, 175d, 175e and 175f and the restrained members 65a, 65b, 65c, 65d, 65e and 65f so as to restrain the door.
Accordingly, the door 250 can be opened and closed easily (in other words, when the electric power is not supplied, the door 250 can be opened and closed with small power).

In the case that the permanent magnets are used as restraining actuators, the strength of magnetic force acting between the permanent magnets and the restrained members is restricted so that the door can be opened and closed by an operator.
On the contrary, as the door 250, in the case that the electromagnets 175a, 175b, 175c, 175d, 175e and 175f are used as restraining actuators restraining the restrained members 65a, 65b, 65c, 65d, 65e and 65f, when the door 250 is closed, even if the strength of magnetic force acting between the permanent magnets and the restrained members is too large for an operator to open and close the door (that is, the door is restrained with large power), there is especially no trouble. Accordingly, the absorbing force by the magnetic force between the magnets and the restrained members can be strengthened further so as to suppress the vibration of the door.

In this embodiment, the switch mechanism 69 is provided at the part at which the holding claw 63c of the holding member 63 is engaged with the frame (the front pillar 140). Only in the case detecting that the holding claw 63c is engaged with the covering member (detecting that the holding member 63 holds the door 250 on the frame), the switch mechanism 69 supplies electric power, which is supplied from the dynamo 67 through the electric wire 68, to the electromagnets 175a, 175b, 175c, 175d, 175e and 175f through the electric wires 70a, 70b, 70c, 70d, 70e and 70f (in Fig. 47, only the electromagnets 70a and 70b are shown). Namely, by pushing the button 63d, the switch (detection means) is turned off, and interlockingly with the switch, the supply of the electric power to the electromagnets 175a, 175b, 175c, 175d, 175e and 175f is stopped so that the electromagnets 175a, 175b, 175c, 175d, 175e and 175f do not work. Accordingly, without any special operation, only by closing the door 250, the electromagnets 175a, 175b, 175c, 175d, 175e and 175f hold the restrained members 65a, 65b, 65c, 65d, 65e and 65f, whereby the workability is improved.

In addition, with regard to the switch mechanism 69, what is necessary is just that electric power is supplied to the electromagnets by detecting that the holding member 63 holds the opening and closing member on the covering member or detecting that the opening and closing member closes the opening of the frame, and the other construction may be adopted. As the detection means for detecting that the holding member 63 holds the opening and closing member on the covering member or detecting that the opening and closing member closes the opening of the frame, a sensor such as an optical sensor, a touch switch or the like can be used.

In this embodiment, since the electric power source for the electromagnets is the dynamo interlocked with the engine 105, the electric power is not supplied to the electromagnets when the engine does not work. However, when the vibration is transmitted to the cabin 112, the engine normally works, and so there is especially no problem.

In this embodiment, in addition to the hinges and the holding member, the permanent magnets or the electromagnets as restraining actuators are provided at the side of the frame of the cabin, and the restrained members, constructed by magnetic material restrained by magnetic force of the permanent magnets or the electromagnets, are provided at the side of the opening and closing member as a means fixing the opening and closing member to the frame of the cabin. However, by adopting each of below constructions, the same effect can be obtained. (1) A sucker which can suck air is provided at the side of the frame of the cabin, and a smooth surface which can be absorbed by the sucker is formed at the side of the opening and closing member. (2) An actuator constructed by a solenoid (having a slidable pin), an air cylinder, a hydraulic cylinder or an electric cylinder is provided at the side of the frame of the cabin so that the peripheral edge of the opening and closing member is pressed (or pulled) to the frame, pressed to the outside, or held (or pressed to the center of the surface in parallel to the surface). (3) A hollow tube is provided at the peripheral edge of the door (for example, the tube is provided instead of the weather strip 64) and air is sent to the hollow of the tube.

Industrial Applicability

The present invention enables hollow resonance frequency in a cabin of a working vehicle or the like without changing the dimensions of the cabin or providing any partition. Accordingly, noise proof structure of a cabin reducing furry noise is provided so as to improve livability and comfortability for an operator.

**Claims**

1. Noise proof structure of a cabin **characterized in that** a resonance pipe or a resonance box resonating at frequency of hollow resonance is provided at a position at which sound pressure is high when the hollow resonance occurs.

2. The noise proof structure of the cabin as set forth in claim 1, wherein the resonance pipe or the resonance box can be exchanged with that having the same resonance frequency and different volume.

3. The noise proof structure of the cabin as set forth in claim 1 or 2, wherein a partition is provided at an opening of the resonance pipe or the resonance box so that the resonance frequency can be adjusted by opening and closing the partition.

4. The noise proof structure of the cabin as set forth in claim 3, wherein a throttle part controlling rotation speed of an engine of a working machine or the like having the cabin is connected interlockingly to the partition at the opening of the resonance pipe or the resonance box so that the partition is opened and closed corresponding to displacement of the throttle part.

5. The noise proof structure of the cabin as set forth in claim 3 or 4, further comprising: a rotary sensor measuring rotary speed of the engine of the working machine or the like having the cabin; an actuator opening and closing the partition at the opening; and a controller controlling the partition through the actuator corresponding to the rotary speed measured by the rotary sensor.

6. The noise proof structure of the cabin as set forth in one of claims 3 to 5, further comprising: a vibration sensor measuring vibration at a prescribed position in the cabin; and a controller adjustingly opening and closing the partition corresponding to a hollow vibration frequency found from the vibration measured by the vibration sensor.

7. The noise proof structure of the cabin as set forth in one of claims 3 to 6, further comprising: a microphone measuring sound pressure in vicinity of the opening; and a controller controlling the partition through the actuator so as to minimize the sound pressure in the vicinity of the opening.

8. The noise proof structure of the cabin as set forth in one of claims 3 to 7, wherein a sensor sensing a part of the cabin at which a door or a window is opened and closed is provided, and when the part is opened, the opening of the resonance pipe or the resonance box is closed.

9. The noise proof structure of the cabin as set forth in one of claims 3 to 8, further comprising: a rotary sensor measuring rotary speed of the engine of the working machine or the like having the cabin, sound pressure in the vicinity of the opening, or vibration at a prescribed position in the cabin; an actuator adjusting length of the resonance pipe or a wall surface of the resonance box; and a controller controlling the actuator opening and closing the partition corresponding to the rotary speed, the sound pressure or the vibration measured by the rotary sensor.

10. The noise proof structure of the cabin as set forth in one of claims 1 to 9, wherein the resonance pipe or the resonance box is provided at a vertex, a corner or an edge of the cabin.

11. The noise proof structure of the cabin as set forth in one of claims 1 to 10, wherein each of at least two positions in the cabin having high sound pressure and frequency different with each other is disposed thereat with the resonance pipes or the resonance boxes having the same resonance frequency.

12. The noise proof structure of the cabin as set forth in one of claims 1 to 11, wherein each of at least two positions in the cabin having high sound pressure and the same frequency mutually is disposed thereat with the resonance pipes or the resonance boxes having the same resonance frequency.

13. The noise proof structure of the cabin as set forth in one of claims 1 to 12, wherein an opening is provided at a part of the cabin and the opening is used as a resonance part.

14. Noise proof structure of a cabin **characterized in that** a dynamic vibration reducer such as a thin film is disposed at a part in the cabin at which sound pressure is high.

15. Noise proof structure of a cabin **characterized in that** a hollow is provided at an end of a part of the cabin whose dimensions are based on hollow resonance and a partition is provided at an opening of the hollow so that a sound field is changed by opening and closing the partition.

16. Noise proof structure of a cabin of a working machine or the like, wherein an opening is provided at a part of a covering member covering an operation part and an opening and closing member is provided at the opening, **characterized in that**:

   one of ends of the opening and closing member is attached through a hinge to the covering member;
   the other end of the opening and closing member is held to the covering member by a holding member;
   one or more restrained members is provided at an peripheral edge of the opening and closing member;
   an restraining actuator is provided at a position facing to the restrained member in the covering member at the time of closing the opening and closing member; and
   the restrained member is restrained by the restraining actuator.

17. The noise proof structure of the cabin as set forth in claim 16, wherein the restraining actuator is an electromagnet, the restrained member is magnetic material, and electric power is supplied to the electromagnet by a dynamo interlocked with a drive source of the working machine or the like.

**18.** The noise proof structure of the cabin as set forth in claim 17, wherein a detection means detecting that the holding member holds the opening and closing member to the covering member is provided, and the detection means is interlocked with the electromagnet.

**19.** The noise proof structure of the cabin as set forth in one of claims 16 to 18, wherein the opening and closing member is shaped substantially polygonal and the restrained member is provided at a vertex of the opening and closing member.

**20.** The noise proof structure of the cabin as set forth in one of claims 16 to 19, wherein the opening and closing member is shaped substantially polygonal and the restrained member is provided at a substantial center of a side of the opening and closing member.

**21.** The noise proof structure of the cabin as set forth in one of claims 16 to 20, wherein an elastic member is interposed between the restrained member and the opening and closing member.

Ｆｉｇ．１

high sound
pressure

low sound
pressure

1

high sound
pressure

vehicle advancing
direction

Fig. 2

high sound pressure

low sound pressure

1

2a

high sound pressure

vehicle advancing direction

Fig. 3

Fig. 4

2b

1

vehicle advancing direction

F i g .  5

1

22

vehicle advancing direction

Ｆｉｇ．６

vehicle advancing direction

Fig. 7

vehicle advancing direction

24

1

Fig. 8

25

1

vehicle advancing direction

Fig. 9

vehicle advancing direction

26

26a

1

F i g . 1 0

27

1

41

vehicle advancing direction

Fig. 11

vehicle advancing direction

27

1

41

Fig. 12

vehicle advancing direction

Fig. 13

EP 1 758 095 A1

vehicle advancing direction

43

42

41

28

1

Fig. 14

28

41

46

45

1

vehicle advancing direction

42

44

50

Fig. 15

EP 1 758 095 A1

vehicle advancing
direction

Fig. 16

vehicle advancing direction

51a

41

27

46

45

42

1

Fig. 17

vehicle advancing direction

F i g. 1 8

F i g . 1 9

Fig. 20

Fig. 2 1

Fig. 22

Fig. 23

Fig. 24

high sound
pressure

low sound
pressure

high sound
pressure

1

F i g . 2 5

Fig. 26

high sound
pressure

low sound
pressure

high sound
pressure

1

F i g . 2 7

Fig. 28

F i g .  2 9

F i g . 3 0

F i g .　3 1

Ｆ ｉ ｇ ． ３ ２

36HA

36HB

1

Fig. 33

36SA

36SB

1

F i g . 3 4

36HA

36SB

1

F i g . 3 5

37                              37

1

Fig. 36

F i g .  3 7

38

37

1

Ｆ ｉ ｇ ． ３ ８

49

high sound
pressure

low sound
pressure

high sound
pressure

1

F i g.  3 9

1

F i g. 4 0

Fig. 41

Fig. 42

Fig. 43

Fig. 44

Fig. 45

Fig. 46

F i g .  4 7

<table>
<tr><td colspan="2">**INTERNATIONAL SEARCH REPORT**</td><td>International application No.<br>PCT/JP2005/007032</td></tr>
</table>

| A. CLASSIFICATION OF SUBJECT MATTER |
| --- |
| Int.Cl[7] G10K11/16, B60J5/00, B62D25/08, H04R1/02 |
| According to International Patent Classification (IPC) or to both national classification and IPC |

| B. FIELDS SEARCHED |
| --- |
| Minimum documentation searched (classification system followed by classification symbols)<br>Int.Cl[7] G10K11/16, B60J5/00, B62D25/08, H04R1/02 |

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | CD-ROM of the specification and drawings annexed to the request of Japanese Utility Model Application No. 86588/1992(Laid-open No. 44681/1994) (Hino Motors, Ltd.), 14 June, 1994 (14.06.94), All pages; all drawings (Family: none) | 1-13,15 |
| Y | JP 8-123429 A (Isuzu Motors Ltd.), 17 May, 1996 (17.05.96), All pages; all drawings (Family: none) | 1-13,15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 July, 2005 (06.07.05) | Date of mailing of the international search report<br>26 July, 2005 (26.07.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/007032

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 7-329828 A  (Nissan Motor Co., Ltd.),<br>19 December, 1995 (19.12.95),<br>All pages; all drawings<br>(Family: none) | 1-13,15 |
| Y | JP 2001-173018 A  (Hitachi Construction<br>Machinery Co., Ltd.),<br>26 June, 2001 (26.06.01),<br>All pages; all drawings<br>(Family: none) | 1-13,15 |
| Y | Microfilm of the specification and drawings<br>annexed to the request of Japanese Utility<br>Model Application No. 20213/1990(Laid-open<br>No. 110934/1991)<br>13 November, 1991 (13.11.91),<br>All pages; all drawings<br>(Family: none) | 1-13,15 |
| X | JP 8-61424 A  (Kurashiki Kako Kabushiki Kaisha),<br>08 March, 1996 (08.03.96),<br>All pages; all drawings<br>(Family: none) | 14 |
| Y | JP 8-184243 A (Dantani Corp.),<br>16 July, 1996 (16.07.96),<br>All pages; all drawings<br>(Family: none) | 16-21 |
| Y | JP 2-35822 B2  (Nissan Shatai Co., Ltd.),<br>14 August, 1990 (14.08.90),<br>All pages; all drawings<br>(Family: none) | 16-21 |
| A | JP 2004-116157 B2  (Aisin Seiki Co., Ltd.),<br>15 April, 2004 (15.04.04),<br>All pages; all drawings<br>(Family: none) | 16-21 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6044681 A

- JP 2003175860 A